# EUROPEAN PATENT APPLICATION

(11) **EP 1 271 369 A1**
(43) Date of publication of application: **02.01.2003**
(21) Application number: 01912363.7
(22) Date of filing: 14.03.2001
(51) Int. Cl.: G06F 17/60, G06F 15/00, G06F 17/30

(54) **SERVER APPARATUS AND INFORMATION DISTRIBUTING METHOD**

(30) Priority: 29.03.2000 JP 2000092178; 30.03.2000 JP 2000094416
(71) Applicant: Omron Corporation, Kyoto-shi, Kyoto 600-8530 (JP)
(72) Inventor: Nakajima, Akira, c/o Omron Corporation, Shimogyo-ku Kyoto-shi, Kyoto 600-8530 (JP); Naganuma, Takefumi, c/o Omron Corporation, Shimogyo-ku, Kyoto-shi, Kyoto 600-8530 (JP); Harima, Maiko, c/o Omron Corporation, Shimogyo-ku, Kyoto-shi, Kyoto 600-8530 (JP); Aoi, Akihiro, c/o Omron Corporation, Shimogyo-ku, Kyoto-shi, Kyoto 600-8530 (JP); Shimizu, Atsushi, c/o Omron Corporation, Shimogyo-ku, Kyoto-shi, Kyoto 600-8530 (JP)
(74) Representative: Calderbank, Thomas Roger
(86) International application number: JP0102024
(87) International publication number: WO01073627

(57) **Abstract**

An information announcing server (1) converts information (6) provided by an information provider (2) into an information program (10) and transmits this information program (10) to an information terminal (5a). The information terminal (5a) transmits the information program (10) to an information terminal (5b) of a user who can not access the information announcing server when not using the information program (10). The information terminal (5b) transmits the information program (10) to a still another information terminal (5c). The information terminal (5c) uses the information contained in the information program (10) and, as a consequence, the information program (10) itself notifies the information announcing server (1) of the "state of use of the information" and a "transfer route list" through a network server (4). Provided with this arrangement is an information delivery system which makes it possible to facilitate promulgation of the information to an unspecified number of users and easily analyze the needs of information users and the effects of information announcement. Also, the side of the information provider is allowed to provide information after selecting users who wish to receive more information or to whom the information provider wishes to provide the information.

## Description

### TECHNICAL FIELD

The present invention relates to an information delivery server apparatus in which information to be provided to the public or to be used for advertisement is registered as well as to a method of delivering information to information terminals connected to the server apparatus through a network. In particular, the invention pertains to a server apparatus and an information delivery method which make it possible to effectively provide information to specific users or to promulgate the information among an unspecified number of users by use of a general-purpose network.

### BACKGROUND ART

It is now becoming possible for information announcers and providers to easily deliver information from an information announcing server or an information providing server to information terminals by use of a general-purpose network of which typical example is the Internet. The information announcing server is a server which provides information to an unspecified number of users, whereas the information providing server is a server which provides information to specific users. Conventionally, the following methods are employed to enable users to acquire information delivered by the information announcers or providers using the general-purpose network:
(A) An information terminal owned by a user accesses an information announcing server or an information providing server and acquires information needed by the user. On the Internet, for example, the user accesses a website where desired information is registered and browses pieces of information for necessary ones or accesses a file transfer protocol (FTP) server to acquire a necessary file by downloading it. When wishing to advertise using the website, the user adds banner advertisement information to the site.
(B) A user registers in advance a type of information he, or she, wishes to acquire and an address of an information terminal specifying a destination of delivery in an information announcing server or an information providing server, and an information terminal owned by the user acquires information delivered from the server. A specific service which makes this possible is that which enables users to register fields of interest in the server, whereby mail news is delivered to a group of users registered to the relevant field of interest. There is also a mail delivery service in which mails are delivered directly to a group of registered users.

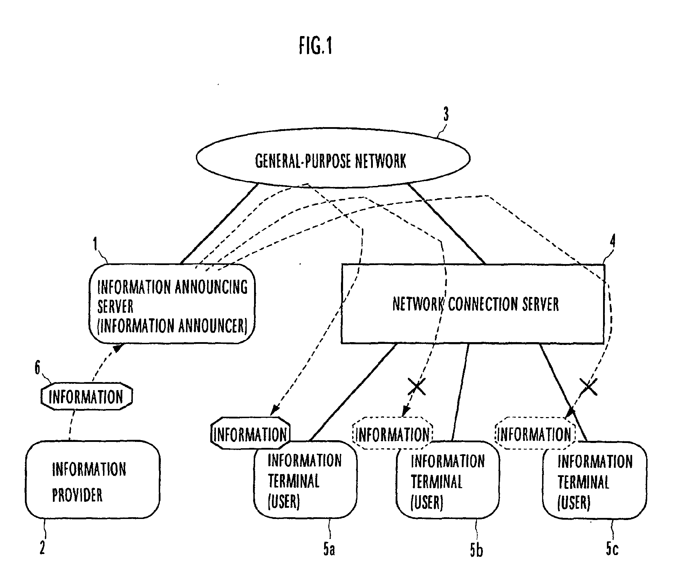

FIG. 1 is a configuration diagram of a system, in which information is announced from an information announcing server to individual information terminals using the aforementioned method (A) or (B).

The information announcing server 1 may be a web server or an FTP server, for example. An information provider 2 who provides information 6 registers it in the information announcing server 1 by a desired method. The information announcing server 1 is run by the information provider 2 and basically differs from the information provider 2. The information announcing server 1 is connected to a general-purpose network 3, such as the Internet. Also connected to the network connection server 4 is a network connection server 4, to which a plurality of information terminals 5 (5a, 5b, 5c) are further connected. The network connection server 4 is run by an Internet connecting company like an Internet service provider, for example.

It is now assumed in connection with the conventional system shown in FIG. 1 that a user having the information terminal 5a knows a method of access to the information announcing server 1 whereas users having the information terminals 5b, 5c do not know the method of access to the information announcing server 1. Under these conditions, when viewed from the side of the information announcing server 1 when the multiple information terminals 5a, 5b, 5c are connected to the network connection server 4, it is possible to provide the information 6 to only the information terminal 5a and not to the other information terminal 5b or 5c.

Also, if the information announcing server 1 is an information providing server, it would provide information to an information terminal from which the information providing server has been accessed but would not know who is the user.

There exist the foregoing problems in the aforementioned system:
(1) Difficulty in promulgating information
   Target people to whom information is intended to be provided are restricted to a limited number of users who know the method of access to the information announcing server 1, so that it is difficult to provide the information to an unspecified number of users. On the side of the users who receive the information, even if they wish to transmit the acquired information to a third person who needs it, there exists no means for providing the information between the users and it is impossible to receive any profit in return for the provision of the information. This is why promulgation of information is not promoted.
(2) Difficulty in announcing information meeting the needs
   It is difficult for an information announcer to announce only those pieces of information which meet the user needs, because the information announcer can not recognize the state of use of the information which has been announced. In addition, there can arise a case where a reasonable profit can not be gained because it is necessary to demand standardized payments from the information announcer regardless of the state of use of the announced information.
(3) Nontransparent effects of information announcing
   Since the information announcer can not recognize the state of use of the announced information, it is difficult for the information announcer to judge the investment efficiency of information announcing.
(4) It is impossible to exclude unnecessary information. The information is not delivered to a destination where it is really needed.
   Even when a customer is willing to purchase a specific subject (commodity) carried by a vender, for example, numerous pieces of unnecessary information are delivered to the customer, because venders provide their information to an unspecified number of users without selecting target customers. To give some specific examples, if one subscribes to direct mail or Internet mail-order services, information on commodities including those in which he or she is not interested in would be delivered day by day.
   For this reason, there is a demand among customers that once the individual customers register commodities they wish to purchase, they should only receive related pieces of information.
(5) When providing information valuable for users, it is impossible to provide it to choice users only. It is impossible to choose users or to rank the users.
   In a case where subjects (commodities) offered by a vender is high-priced or its sale is greatly affected by the preference of the users, for example, only a few of them could purchase or would hope to purchase even if such expensive commodities are introduced to an unspecified number of users. Antiques are a specific example of such commodities.
   Accordingly, it is a common hope among venders that they could first introduce their commodities to those people who are interested in antiques and have greater potential of purchasing expensive goods and would not deliver the information to window-shoppers.
(6) When information on unique goods or rare goods is provided, users rush in and scramble for the goods.
   In a case where a subject (commodity) offered by a vender is an only article of its kind or a rare article, numerous users would rush in and scramble for the article if the information is provided to an unspecified number of users. This situation would leave dissatisfaction among those who could not purchase. Specific examples of this kind are brokerage of vacant rooms offered by real estate agents and introduction of a limited number of bargain goods.
   Thus, it is a common hope among information providers to properly control the number of inquiries, because a real estate agent can negotiate with only one customer at one time although a number of inquiries would rush-in for a good rental. Similarly, even if the information providers wish to provide bargain goods information or other welcome information only to their good customers, excellent special members and excellent members, customers who could not purchase due to limitations in the number of goods would be dissatisfied, turning their special services into unfortunate results. The information providers commonly wish to properly control the number of information destinations in such cases.
(7) If information whose value is limited in time is provided on request from users, it is impossible to provide the information within its period of validity, causing a waste of goods.

When the usefulness of a subject (commodity) offered by a vender is limited in time, it is impossible to sell relevant goods if the vender is just waiting accesses and replies from users. Specific examples of this kind are concert tickets and tickets for watching sport games.

Thus, it is a common hope among information providers to resale tickets quickly and reliably without causing confusion.

It is an object of the invention to provide a server apparatus to be used in an information delivery system, the server apparatus being capable of facilitating promulgation of information to an unspecified number of users.

It is another object of the invention to provide a server apparatus which enables an information announcer or an information provider to recognize the state of use of delivered information and easily analyze the needs of information users and the effects of information announcing.

It is still another object of the invention to provide a server apparatus which enables an information provider to selectively provide information to those users who more wish to receive the information or to those users to whom the information provider wishes to provide the information without laying the information open to the public.

### DISCLOSURE OF THE INVENTION

A server apparatus of the present invention in which information to be announced is registered, the server apparatus being connected to a general-purpose network, comprises:
an information processing section for converting the aforesaid registered information into an information program;
a section for transmitting this information program to an information terminal connected to the general-purpose network; and
a profit calculating section for calculating a profit to be returned to a user of the information terminal.

The aforesaid information processing section processes the information in such a manner that the information program has the following sections:
(a) an information storage section for storing information to be displayed on the information terminal;
(b) a section for storing the address of each destination information terminal to which the information program has been transferred in the form of a transfer route list; and
(c) a section for transmitting the state of use of the information stored in the aforesaid information storage section as the type of use of the information together with the aforesaid transfer route list from the information terminal to the aforesaid server apparatus;
wherein upon receiving the type of use of the aforesaid information and the transfer route list from the aforesaid information program, the aforesaid profit calculating section automatically calculates the amount of profit to be paid back to the user of the aforesaid information terminal as a result of receiving the type of use of the aforesaid information and the transfer route list.

In this invention, the server apparatus operates as follows.

An information program produced based on information provided by an information provider is prepared in the server in an initial stage. If a request for the information is made from an information terminal which can access the server at this point in time, the server transmits the information program to the first information terminal. When the information program is executed in the first information terminal, the information is displayed on the first information terminal by the aforementioned function (a) of that information program. If the user has no intention to use the relevant information, that is, the information is concerned with an article for sale and the user has no intention to purchase it, for instance, the information program is transmitted to a second information terminal. Here, this second information terminal is an information terminal which can communicate with the first information terminal and is selected by the user of the first information terminal. Typically; the owner of the second information terminal, or its user, is expected to be an acquaintance or a friend of the user of the first information terminal. When the second information terminal can not access the server as its address is unknown, it is possible to see the information on the information terminal by receiving and executing the information program, and then later access the server.

Also, since the information program stores the transfer route list which has been transferred between information terminals by the aforementioned function (b), the server can recognize the state of use of the information as type of use of the information together with the aforementioned transfer route list when the information program is received by the aforementioned function (c).

The server is also provided with the profit calculating section for calculating the amount of profit to be paid back to the user of the information terminal. This profit is a return for the introduction of a user of another information terminal, or the return for an increase in the number of information users as a result of transmitting the information program to the users of other information terminals. This profit calculating section can automatically calculate the amount of profit to be paid back to the user of the aforementioned information terminal as a result of receiving the type of use of the aforementioned information and the transfer route list stored in the aforementioned information program. This. would help produce a motivation among the users of the aforementioned information terminals to efficiently and quickly promulgate the information and thereby accomplish more efficient promulgation of the information.

In this invention, it is also possible to provide a profit calculating section for calculating a profit to be returned to a server operator. This profit is a return for successful operation of the server. This profit calculating section can automatically calculate the amount of profit to be paid back to the server operator as a result of receiving the type of use of the aforementioned information and the transfer route list stored in the aforementioned information program. This would help produce a motivation in the server operator to efficiently and quickly promulgate the information and thereby accomplish more efficient promulgation of the information.

A server apparatus of the present invention in which information to be delivered to specific information terminals is registered, the server apparatus being connected to a general-purpose network, comprises:
an information processing section for converting the aforesaid registered information into an information program; and
a section for transmitting this information program to one of the information terminals connected to the general-purpose network;
wherein the aforesaid information processing section processes the information in such a manner that the information program has the following sections:
(a) an information storage section for storing information to be displayed on the information terminal;
(b) a section for storing the address of each destination information terminal to which the information program is transferred in the form of a transfer destination address list; and
(c) a section for transmitting the state of use of the information stored in the aforesaid information storage section as the type of use of the information from the information terminal to the server apparatus;
   the aforesaid server apparatus further comprising a transfer destination address list selecting section for selecting the aforesaid transfer destination address list provided in the aforesaid information program from a plurality of preclassified address lists;
wherein the aforesaid information program is not transferred to the information terminals on the address lists unselected by the aforesaid transfer destination address list selecting section but is sequentially transferred from one information terminal to another which are on the transfer destination address list selected by the aforesaid transfer destination address list selecting section only without going through a main part of the aforesaid server apparatus.

According to the aforementioned configuration, it is possible to provide the information to only those users who are supposed to need the information in this invention. Also, on the user side, it is possible to prevent unnecessary information from being delivered to the user.

The aforesaid transfer destination address list selecting section of the invention is configured such that it selects the aforesaid transfer destination address list after weighting the preclassified multiple address lists, whereby the aforesaid information program is sequentially transferred from one information terminal to another which are on a heavily weighted address list selected by the aforesaid transfer destination address list selecting section at first.

In this invention, it is possible to avoid vainly delivering the information by classifying the users on the side of the information provider. For example, it is possible to deliver the information to a group of frequently purchasing people, a group of people earning higher annual incomes only or, conversely, to people earning lower annual incomes only.

A server apparatus of the present invention in which information to be delivered to specific information terminals is registered, the server apparatus being connected to a general-purpose network, comprises:
an information processing section for converting the aforesaid registered information into an information program; and
a section for transmitting this information program to one of the information terminals connected to the general-purpose network;
wherein the aforesaid information processing section processes the information in such a manner that the information program has the following sections:
(a) an information storage section for storing information to be displayed on the information terminal;
(b) a section for storing the address of each destination information terminal to which the information program is transferred in the form of a transfer destination address list;
(c) a section for transmitting the state of use of the information stored in the aforesaid information storage section as the type of use of the information from the information terminal to the aforesaid server apparatus; and
(d) a section for deleting the information program in each source information terminal when the information program has been transferred to another information terminal; and
   wherein the aforesaid information program is not transferred to the information terminals which are not on the aforesaid transfer destination address list but is sequentially transferred from one information terminal to another which are on the aforesaid transfer destination address list without going through a main part of the server apparatus and, while the aforesaid information program is being transferred, the aforesaid information program gives a right of access to the main part of the server apparatus only to the information terminal in which the aforesaid information program exists, so that only the information terminal having the access right is allowed to access the main part of the server apparatus.
   In this invention, only those people who have the right of access to the server for purchasing rare goods or receiving an introduction of their information is allowed to purchase them or receive their introduction. With this arrangement, it is possible to prevent a rush of purchase orders or inquiries as well as scrambling for the purchase of an offered commodity or a service, thus ensuring efficient distribution of the information. Also, by registering the information in classified form and enabling only those information terminals which have the aforementioned access right to access pieces of information stored in deeper layers, it is possible to treat pieces of information in shallower layers as summarized information and those in the deeper layers as detailed information. In this case, only the information terminals having the access right can obtain the detailed information due to priority of the access right.
   The information processing section of the invention is configured such that it processes the aforesaid information in such a manner that the information program further has:
(e) a dwell time limit control section for limiting the period of time during which the information program stays in one information terminal so that the information program is automatically transferred to the next information terminal when the aforesaid period of time has elapsed;
wherein the aforesaid information program is not transferred to the information terminals which are not on the aforesaid transfer destination address list but is sequentially transferred from one information terminal to another which are on the aforesaid transfer destination address list without going through the main part of the server apparatus and, while the aforesaid information program is being transferred, dwell time of the aforesaid information program in each information terminal in which the aforesaid information program exists is limited and the aforesaid information program is automatically transferred to the next information terminal when the aforesaid period of time has elapsed.

With respect to information on tickets of which validity is limited in time, for instance, it is possible in such a configuration to complete the sale of a commodity like tickets within a predefined period of time by limiting the duration of time that the information program stays in each information terminal.

### BRIEF DESCRIPTION OF THE DRAWINGS

FIG. 1 is a configuration diagram of a conventional information delivery system;
FIG. 2 is a configuration diagram of an information delivery system according to a first embodiment of the invention;
FIG. 3 is a functional configuration diagram of an information announcing server;
FIG. 4 is a functional configuration diagram of an information terminal;
FIG. 5 is a functional configuration diagram of an information program;
FIG. 6 shows an example of the information program;
FIG. 7 is a diagram showing part of general organization of mobile agent technology;
FIG. 8 is a flowchart showing operations of the information announcing server of the information delivery system;
FIG. 9 is a flowchart showing operations of the information announcing server of the information delivery system;
FIG. 10 is a flowchart showing operations of the information announcing server of the information delivery system;
FIG. 11 is a flowchart showing operations of the information announcing server of the information delivery. system;
FIG. 12 is a flowchart showing operations during information delivery;
FIG. 13 is a flowchart showing operations of the information announcing server performed when it is notified of an information delivery state;
FIG. 14 is a flowchart showing operations of the information terminal;
FIG. 15 is a general configuration diagram of an online advertisement delivery system;
FIG. 16 is a flowchart showing operations of the online advertisement delivery system;
FIG. 17 is a diagram illustrating the configuration of an information delivery system according to a second embodiment of the invention;
FIG. 18 is a configuration diagram of an information delivery system according to the second embodiment of the invention;
FIG. 19 is a functional configuration diagram of an information providing server;
FIG. 20 is a functional configuration diagram of an information terminal;
FIG. 21 is a functional configuration diagram of an information program;
FIG. 22 is a configuration diagram of information;
FIG. 23 is a diagram showing part of general organization of mobile agent technology;
FIG. 24 is a diagram illustrating a first practical example of the information delivery system according to the aforementioned second embodiment;
FIG. 25 is a flowchart showing operations of the first practical example;
FIG. 26 is a diagram illustrating a second practical example of the information delivery system according to the aforementioned second embodiment;
FIG. 27 is a diagram illustrating a third practical example of the information delivery system according to the aforementioned second embodiment;
FIG. 28 is a flowchart showing operations of the third practical example;
FIG. 29 is a diagram illustrating a fourth practical example of the information delivery system according to the aforementioned second embodiment;
FIG. 30 is a flowchart showing operations of the fourth practical example;
FIG. 31 is a diagram illustrating a fifth practical example of the information delivery system according to the aforementioned second embodiment;
FIG. 32 is a flowchart showing operations of the fifth practical example;
FIG. 33 is a flowchart showing operations of a sixth practical example;
FIG. 34 is a diagram showing an example adopting the aforementioned first practical example as means for advertisement;
FIG. 35 is a diagram showing an example adopting the third practical example as means for advertisement and guidance;
FIG. 36 is a diagram showing an example adopting the fourth practical example as means for providing information on vacant rooms for a real estate agent; and
FIG. 37 is a diagram showing an example adopting the aforementioned fifth practical example as means for vending tickets.

### BEST MODES FOR CARRYING OUT THE INVENTION

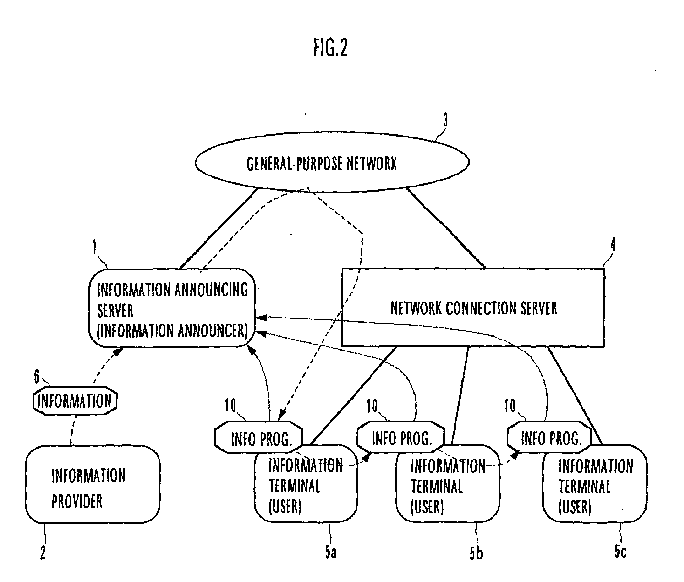

Shown in FIG. 2 is an information delivery system including an information announcing server according to a first embodiment of the present invention. As compared with the conventional system shown in FIG. 1, the information delivery system of this Figure differs in that an information program 10 transfers within the system.

FIG. 2 is a diagram which for facilitating understanding of the aforementioned information announcing server.

The information program 10 is what is output when information 6 provided by an information provider 2 is processed by the information announcing server 1. After the information program 10 has been produced by the information announcing server 1, it is transmitted to an information terminal 5 which has requested the provision of the program 10 or to an information terminal 5 predetermined in the information announcing server 1 as a destination of delivery via a general-purpose network 3. This information program 10 can be exchanged among information terminals 5. This transfer of the information program 10 to and from the information terminals 5 is accomplished by transmit-receive operation via the general-purpose network 3 or by transmit-receive operation via other form of a wired or wireless network. In the present discussion, the type of means for transferring the information program 10 between the information terminals 5 does not matter. Rather, any transfer means, which is currently available or will become available in the future, may be employed.

While the information program 10 can execute specific functions as a program itself, it is necessary that an environment for running the program be available in the individual information terminals 5. This environment can be realized by software (which is usually referred to as middleware) installed in an operating system (OS) or in its upper layer within the individual information terminals 5. With this feature, the information program 10 accomplishes its inherent functions on the individual information terminals 5. In this embodiment, the information program 10 has the following functions (a) to (c):
(a) An information storage section for storing information to be displayed on each information terminal 5;
(b) A section for storing the address of each destination information terminal 5 to which the information program 10 has been transferred in the form of a "transfer route list"; and
(c) A section for transmitting the state of use of the information stored in the aforementioned information storage section as the "type of use" of the information together with the aforementioned "transfer route list" from each information terminal 5 to a server like the information announcing server 1.

The function (a) above is a function for displaying the information 6 on a display device of the information terminal 5. For this purpose, the information storage section for storing the information 6 is provided in the program 10.

The function (b) above is a function for storing the address of the destination information terminal 5 in the form of a transfer route list when the information program 10 has been transferred from one information terminal 5 to another.

The function (c) above is a function for transmitting the state of use of information determined according to a user input (e.g., the state in which the user enters a purchase order when the information is concerned with an article for sale) as the type of use of information together with the aforementioned transfer route list of (b) above to the information announcing server 1 when the information program 10 has been executed. The destination of transmission need not be the information announcing server 1 but may be other server.

In this embodiment, the information delivery system operates as described in the following when the aforementioned information program 10 is installed in the system.

Referring to FIG. 2, the information program 10 produced based on the information 6 provided by the information provider 2 is prepared in the information announcing server 1 in an initial stage. If a request for the information 6 is made from one information terminal 5a which can access the information announcing server 1 at this point in time, the information announcing server 1 transmits the information program 10 to the information terminal 5a. When the information program 10 is executed in the information terminal 5a, the information 6 is displayed on the information terminal 5a by the aforementioned function (a) of that information program 10. If the user has no intention to use the relevant information 6, that is, the information 6 is concerned with an article for sale and the user has no intention to purchase it, for instance, the information program 10 is transmitted to another information terminal 5b. Here, this another information terminal 5b is an information terminal which can communicate with the information terminal 5a and is selected by the user of the information terminal 5a. Typically, the owner of the information terminal 5b, or its user, is expected to be an acquaintance or a friend of the user of the information terminal 5a. In the example shown in FIG. 2, it is assumed that the information terminal 5b can not access the information announcing server 1 unless the information terminal 5b receives the information program 10. Although the information terminal 5b can not access the information announcing server 1 until it receives the information program 10, the user of the information terminal 5b can see the information 6 on the information terminal 5b by receiving and executing the information program 10 and access the information announcing server 1.

It is assumed in the example shown in FIG. 2 that the user of the information terminal 5b does not use this information 6 and the user of the information terminal 5b further transmits the information program 10 to an information terminal 5c owned by his or her acquaintance or friend. Although the information terminal 5c can not access the information announcing server 1 either until it receives the information program 10, the user of the information terminal 5c can see the information 6 on the information terminal 5c by receiving and executing the information program 10 and access the information announcing server 1. In a case where the user of the information terminal 5c wishes to use the information 6, that is, if that information 6 is concerned with an article for sale and the user intends to purchase it, for instance, the user enters a specific instruction by using a user interface. Then, the information program 10 transmits the state of use of the information 6 as the type of use of information to the information announcing server 1. By analyzing the content of the received information program 10, theinformation announcing server 1 can recognize the transfer route list indicating the path of flow of the information program 10 from the information terminal 5a to the information terminal 5b and then to the information terminal 5c as well as the state of use of the information 6 by the last information terminal 5c.

While the aforementioned information delivery system has been described as being provided with the three information terminals 5a-5c, the system would operate similarly even when the number of information terminals is several hundreds or tens of thousands. Therefore, even if there exist a large number of information terminals like the information terminals 5b and 5c which can not access the information announcing server 1, the information announcing server 1 can deliver the information 6 to that large number of information terminals. Since the information program 10 can be successively transferred from one information terminal to another in this way, it is expected that the information 6 is automatically transmitted to the many information terminals only if the information program 10 is transmitted from the information announcing server 1 to the first information terminal. It is therefore possible to easily achieve promulgation of the information 6.

Furthermore, since the information program 10 memorizes the transfer route list indicating the path of flow of the information program 10 itself, it is possible to recognize the information terminal (user) to which the information 6 has been delivered and to know the rate of use of the information 6 in relation to the number of deliveries of the information 6. This enables the information provider 2 to recognize the needs of users and analyze what kinds of information meet the needs of the users. In addition, as it becomes possible to provide the information provider 2 with the results of analysis of what kinds of information have been widely promulgated, the information provider 2 can easily recognize the relationship between the kinds and contents of information and the effects of its promulgation.

If the information announcing server 1 is provided with at least a processor for converting the information 6 provided into the information program 10 and a section for transmitting the information program 10 to the information terminals 5 connected to the general-purpose network 3, it is possible to easily promulgate the information 6. In addition, if the information announcing server 1 is further provided with a communicating section for receiving the transfer route list produced by the aforementioned function (c) of the information program 10, it is possible to analyze information on destinations of the information program 10 and the range of its promulgation or the needs of the users, for instance. The information announcing server 1 of the present embodiment does not necessarily need the aforementioned communicating section if it is simply intended to achieve promulgation of the information. 6.

The information terminal 5 connected to the information announcing server 1 via the general-purpose network 3 is constructed as described below.

Specifically, the information terminal 5 has an information program transmit-receive section for receiving the aforesaid information program 10 from the information announcing server 1 or for exchanging the information program 10 with another information terminal 5 without going through the information announcing server 1, an information program execute section for executing the information program 10, and a user interface for displaying the result of execution by the information program execute section and for allowing user inputs in response to the displayed content.

It is necessary for the information terminal 5 to have a function of executing the information program 10. When an ordinary personal computer is used as the information terminal 5, it is necessary to have a virtual OS based on Java, for instance, for executing the information program 10 as well as a program that runs under the virtual OS. This program and the information program 10 of this embodiment might be together referred to as an agent system in the explanation of the embodiment. These programs, when written in Java, might also be referred to as a Java agent system. In this embodiment, the information program 10 corresponds to an agent, and because the information program 10 has a function of transferring between the information terminals 5, the information program 10 might also be referred to as a mobile agent.

The information terminal 5a has its information program transmit-receive section for receiving the information program 10 which is a mobile agent and for exchanging the information program 10 with another information terminal 5 without going through the information announcing server 1. The information terminal 5a also has an information program execute section for executing the information program 10, as well as a user interface for displaying the results of execution by the information program execute section and for allowing user inputs in response to the displayed content.

The information announcing server 1 has a function of automatically calculating the amount of profit to be paid back to an information terminal 5 according to the result of receiving the type of use of information and the transfer route list (which are received from the information terminal 5c in the example shown in FIG. 2) following the execution of the information program 10. This payback is an economic return offered by the user of one information terminal 5 to the user of another information terminal 5 in return for the disclosure of the information. The aforementioned information delivery system of the present embodiment is configured by adopting an arrangement for automatically calculating (and delivering) the amount of profit to be paid back as an economic return for the disclosure of the information.

In the information delivery system of this embodiment adopting such arrangement, the users owning the individual information terminals 5 have a motivation to gain the payback and, due to this motivation, the possibility that the information program 10 will transfer through a number of information terminals increases. By carefully devising a method of automatic calculation of the amount of profit, one can expect such a tendency that the range of promulgation of the information 6 further extends or the information program 10 transfers only to those users who are willing to use the information 6. Considering a situation where the information 6 is used, should a user expresses an intention to purchase an article when the information 6 pertains to the sale of the article, for example, the system adopts a method of calculation which will increase the amount of profit to be paid back to a source information terminal which has transmitted the information program 10 immediately before. As a result, it is possible to increase the possibility that a destination information terminal to which the information program 10 is transferred becomes an information terminal (user) which will intend to use the information 6. Furthermore, if the method of calculation which will increase the amount of profit to be paid back when the information program 10 has been transferred to another information terminal within a specific period of time, it is possible to increase the rate of promulgation of the information 6.

When the amount of profit to be paid back to the user of an information terminal 5 is automatically calculated based on the type of use of information and the transfer route list held in the information program 10 which are returned to the information announcing server 1 as described above, there arises a motivation among the individual users of the information terminals 5 to efficiently and quickly promulgate the relevant information 6. This would help accomplish more efficient promulgation of the information 6.

Moreover, it is possible to automatically calculate the amount of profit to be paid back from the side of-the information provider 2 to an information announcer (server operator) who operates the information announcing server 1 in this embodiment. By adopting this arrangement, there arises a motivation for the information announcer who operates the information announcing server 1 to further promote the effect of promulgating the information 6, whereby the information provider 2 can expect efficient promulgation of the information 6.

The information 6 would most typically be advertising information. In the present embodiment, the content of advertisement is not particularly limited. Rather, it may be any kind of advertising information concerning commodities, services, real estate, or else.

A specific example of the aforementioned first embodiment is now described below.

An information delivery system using the Internet is described as an example. The overall configuration of the information delivery system using the Internet is the same as the system shown in FIG. 2. A network of the Internet is used as the general-purpose network 3, a server operated by an Internet provider constitutes a network connection server 4, and ordinary personal computers correspond to the information terminals 5. The information terminals 5 may be mobile telephones connectable to the Internet. As will be described later, the structure of each information terminal 5 is such that Java serving as a virtual OS runs under an OS of a personal computer, whereby the entire personal computer works as a Java virtual machine. Installing the Java virtual machine makes it possible to run the information program 10 regardless of the type of the OS installed in each information terminal 5.

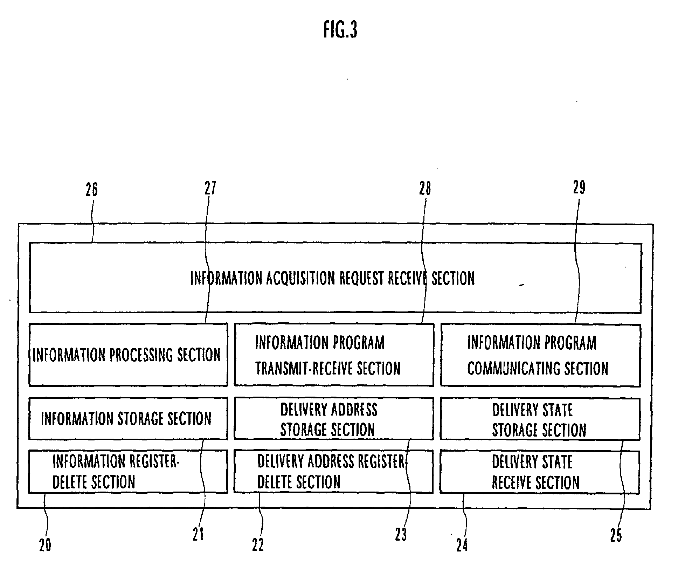

FIG. 3 is a functional configuration diagram of the information announcing server 1.

An information register-delete section 20 performs registration of the information 6 to be announced to other information terminals 5 on the network as well as deletion of the registered information 6.

An information storage section 21 stores the information 6 registered by the information program 10.

A delivery address register-delete section 22 performs registration of an address of each information terminal 5 to which the information 6 might be delivered as well as deletion of the registered information terminal 5. The address to be registered should be identification means (ID) which uniquely defines the information terminal 5 on the network. On the Internet, an Internet Protocol (IP) address is this kind of ID.

A delivery address storage section 23 stores the addresses of the information terminals 5 registered by the delivery address register-delete section 22.

A delivery state receive section 24 receives the "type of use of information" and a "transfer route list" transmitted from an information program communicating section 29 and writes them in a delivery state storage section 25.

The delivery state storage section 25 stores the "type of use of information" and the "transfer route list" received by the delivery state receive section 24.

An information acquisition request receive section 26 receives an information acquisition request from the information terminal 5 and requests an information program 10 corresponding to requested information from an information processing section 27.

The information processing section 27 retrieves the information 6 stored in the information storage section 21 and converts it into the information program 10.

An information program transmit-receive section 28 delivers the information program 10 to the information terminal 5 which has made the information acquisition request or to the information terminal 5 registered in the. delivery address storage section 23.

As a result of execution of the delivered information program 10 at the particular information terminal 5, the information program communicating section 29 receives the "type of use of information" and the "transfer route list" from that information terminal 5 and notifies the received information to the delivery state receive section 24.

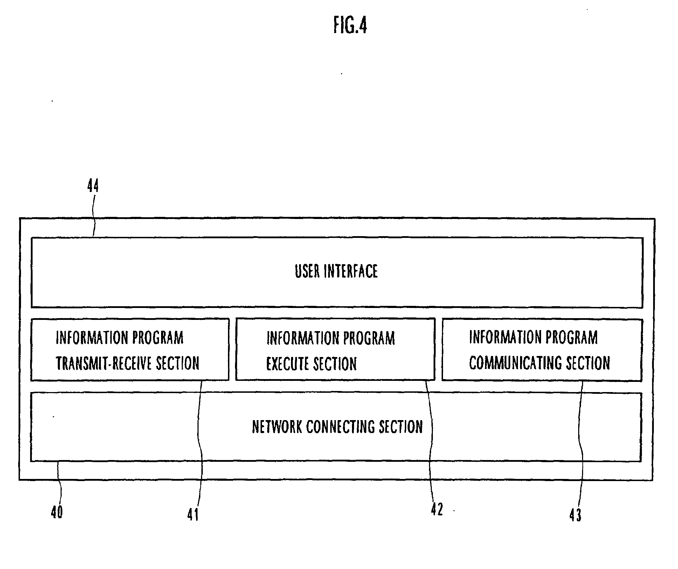

FIG. 4 is a functional configuration diagram of the information terminal 5.

While the information terminal 5 is usually formed of a personal computer, the OS stored in the personal computer and the Java virtual machine (Java VM) for making the personal computer a virtual machine which operates regardless of a platform are omitted in FIG. 4.

A network connecting section 40 communicates with the network connection server 4 to establish and maintain connections of the information terminals 5 to the network.

An information program transmit-receive section 41 receives the information program 10 transmitted from the information announcing server 1 or from any of the other information terminals 5 or transmits the information program 10 to any of the other information terminals 5.

An information program execute section 42 executes the received information program 10. As will be discussed later, the information program 10 has a function of displaying information. Thus, when the information program 10 has been executed by the information program execute section 42, the result of its execution, or the information, is displayed on a user interface 44.

An information program communicating section 43 has a function of transmitting the "state of use of information" and the "transfer route list" to the information announcing server 1 as a result of execution of the information program 10.

The user interface 44 displays the result of execution of the information program 10, or the information, and accepts user inputs.

In the above-described information terminal 5, the OS and the Java VM are placed on an upper layer of the network connecting section 40 and the information program transmit-receive section 41, the information program execute section 42 and the information program communicating section 43 are situated on an upper layer of the Java VM. These mechanisms excluding the OS are functional programs which are provided as middleware. As these functional programs are situated on the upper layer of the Java VM, they do not depend on the type of the information terminal 5 (platform) and may be of the single kind.

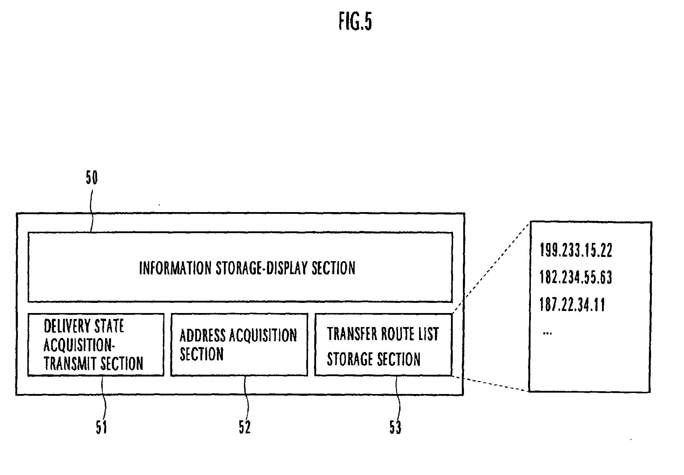

FIG. 5 is a functional configuration diagram of the information program 10 produced by the information announcing server 1.

An information storage-display section 50 stores the information 6 which may be delivered and displays the information 6 on the user interface 44 of the information terminal 5 (refer to FIG. 4).

A delivery state acquisition-transmit section 51 acquires the "type of use of information" based on a user input with respect to the information 6 displayed by the information storage-display section 50 and notifies the information announcing server 1 of the "type of use of information" together with the "transfer route list" acquired from a transfer route list storage section 53.

An address acquisition section 52 acquires the address from the information terminal 5 in which the information program 10 of its own exists and adds that address to the transfer route list storage section 53.

The transfer route list storage section 53 stores the addresses and the order of the information terminals 5 through which the information 6 has been transferred. In the example shown in the Figure, the addresses of the information terminals 5 through which the information 6 has been transferred are registered in a correct sequence. The method of producing the transfer route list is not limited to this example but may be substituted for any alternative. method.

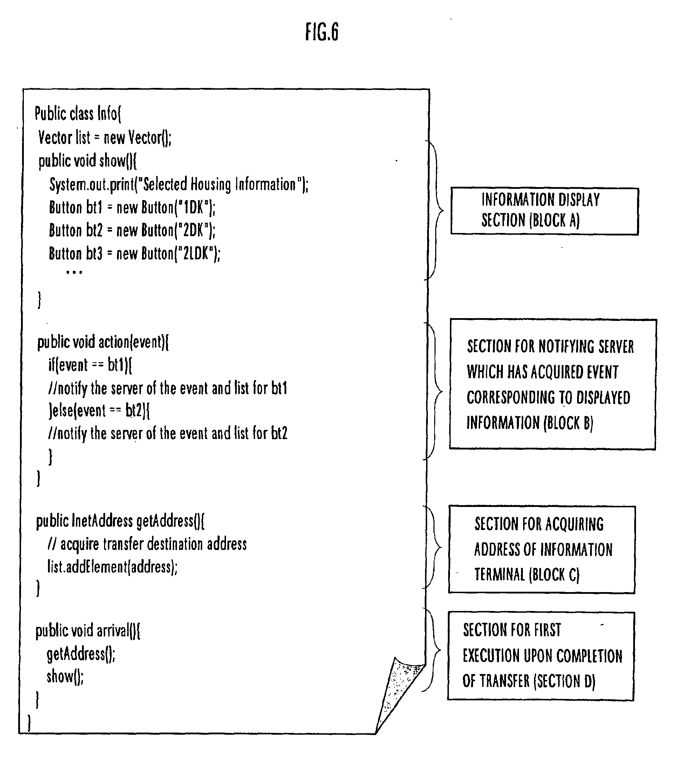

FIG. 6 shows an example of the information program 10.

Shown in this Figure are blocks A to D from top to bottom.

The block A has a function of displaying the information 6. Here, the block A has a function of displaying the characters "Selected Housing Information" and three kinds of buttons as the information 6.

The block B is a function of acquiring an event corresponding to the displayed information 6 and notifying the server. This block corresponds to the delivery state acquisition-transmit section 51 of FIG. 5.

The block C is a function of acquiring the address of the information terminal 5 in which the information program 10 exists. This block corresponds to the address acquisition section 52 of FIG. 5.

The block D is a section which is first executed upon completion of information transfer. In this block D, "getAddress" is executed and the address of a destination of transfer is acquired upon reading out the block C.

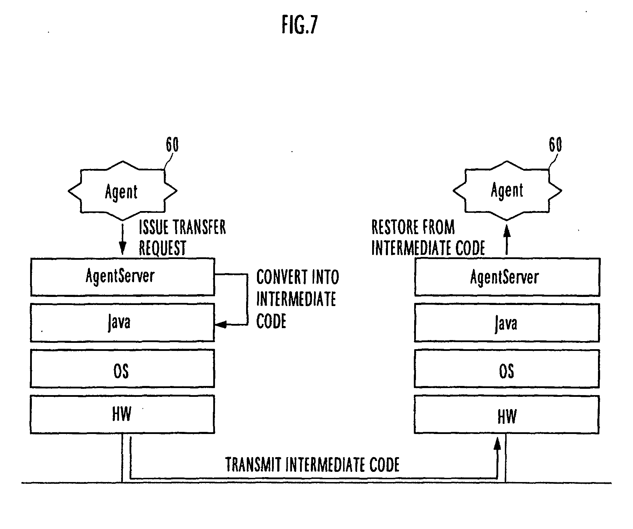

In this embodiment, the information program 10 and the aforementioned functional programs are configured by a mobile agent system. This mobile agent system includes all of the functional sections of the information program 10 of FIG. 5, the functional sections of the information announcing server 1 of FIG. 3 and the functional sections of the information terminal 5 of FIG. 4. The information program 10 is a mobile agent which transfers from one information terminal 5 to another. The mechanism of this mobile agent system in which the agent corresponding to the information program 10 transfers in succession is briefly explained with reference to FIG. 7.

As this mobile agent system constitutes programs which are actually situated on an upper layer of the Java and run on the Java virtual machine, the programs are referred to as Java mobile agents.

When a mobile agent transfers from one information terminal 5 to another information terminal 5, the mobile agent becomes absent in the source information terminal 5. Specifically, when the mobile agent transfers to another information terminal 5, the mobile agent in the source information terminal 5 is deleted. As a result, the mobile agent transferring between the information terminals 5 are not duplicated but only the single mobile agent transfers from one information terminal 5 to another in succession.

As shown in FIG. 7, the OS, Java (OS) and Agent Server are stacked in this order on top of hardware HW in each information terminal 5, where Agent Server is middleware. Referring to FIG. 7, let us now assume a situation in which a mobile agent 60 is present in the information terminal 5 connected to a node on the left side and this mobile agent 60 transfers to the information terminal 5 connected to a node on the right side. The mobile agent 60 issues a transfer request to the Agent Server. As a result, the Agent Server converts the transfer request into an intermediate code which is communicable through the network and delivers it to Java (OS) in the lower layer. This intermediate code is transmitted to the intended information terminal 5 and reconverted into an original code by the Agent Server to restore the agent 60. When the agent 60 is reconstructed in the information terminal 5 on the right side and the information terminal 5 on the left side receives this result, the agent 60 in the information terminal 5 on the left side is deleted so that the agent 60 does not exist therein. This delete operation is undertaken by the Agent Server.

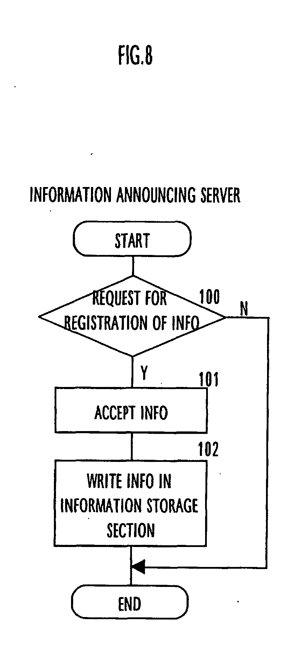

Next, specific operations of the aforementioned information delivery system are described referring to FIGS. 8 and onward.

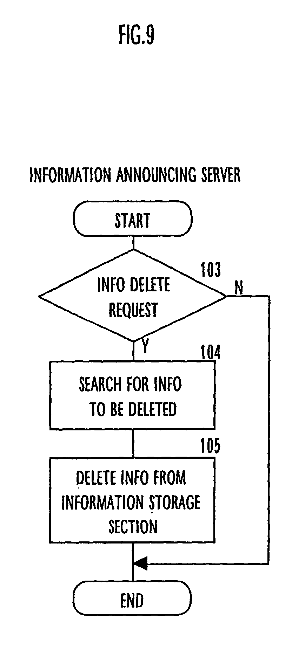

FIGS. 8 and 9 depict operations performed when information is registered or deleted in the information announcing server 1.

When there is a request for registration of the information 6 provided by the information provider 2 (step 100), the information announcing server 1 accepts the information 6 (step 101) and writes it in the information storage section 21 (step 102).

Deletion of the information 6 is performed as follows. When there is an information delete request from the information provider 2 (step 103), the information 6 to be deleted is searched for through the information storage section 21 (step 104) and the information 6 to be deleted is deleted from the information storage section 21 (step 105).

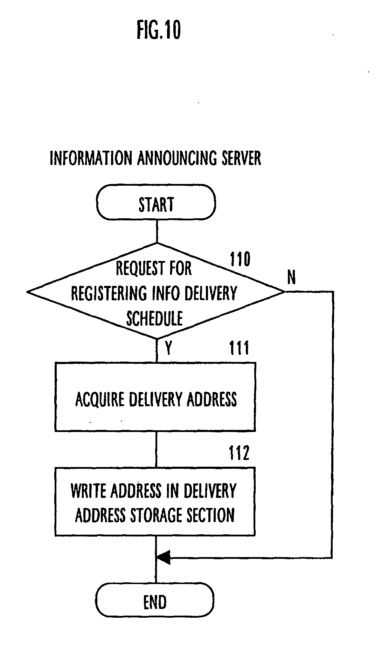

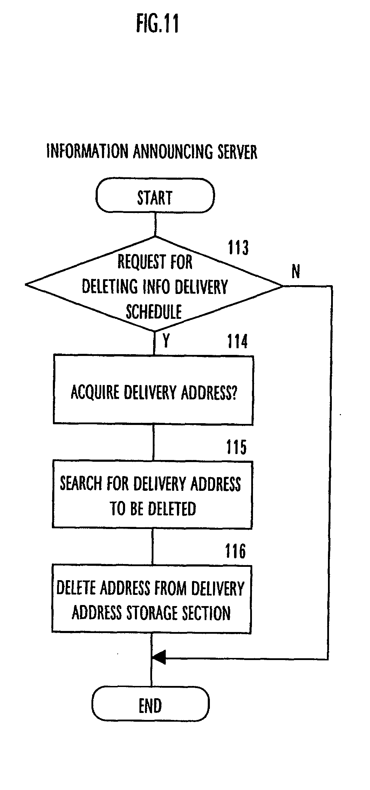

FIGS. 10 and 11 depict operations for registration and deletion of an information delivery schedule.

When there is a request for registering an information delivery schedule (step 110), the information announcing server 1 acquires a delivery address (step 111) and writes the delivery address in the delivery address storage section 23 (step 112).

Deletion of the information delivery address is performed as follows. When there is a request for its deletion (step 113), the information announcing server 1 acquires a delivery address (step 114), the delivery address be deleted is searched for through the delivery address storage section 23 (step 115) and the address is deleted (step 116).

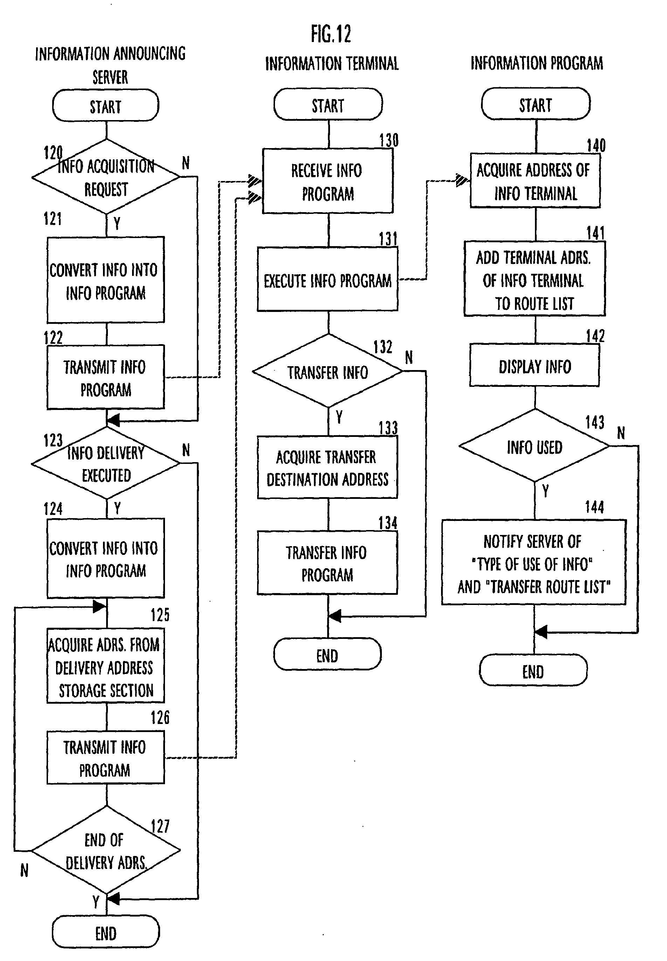

FIG. 12 depicts operations performed when delivering the information 6.

When an information acquisition request from one of the information terminals 5 is detected (step 120) or an event for executing information delivery is issued (step 123), the information announcing server 1 produces the information program 10. Specifically, in the former case, the information announcing server 1 causes the information processing section 27 to convert the requested information 6 into the information program 10 (step 121) and transmits the information program 10 to the information terminal 5 which has made the information acquisition request (step 122). In the latter case, the information announcing server 1 converts the information 6 to be delivered into the information program 10 (step 124), acquires addresses stored in the delivery address storage section 23 (step 125), and transmits the information program 10 to the acquired addresses (step 126). Upon completing transmission of the aforesaid information program 10 to all the delivery addresses, operation on the server side is finished.

The information terminal 5, if it is the information terminal which has made the information acquisition request, receives the information program 10 in step 130 (step 130) and executes the information program 10 (step 131). If the information terminal 5 is the information terminal registered in the delivery address storage section 23 and the information program 10 has been transmitted to that information terminal 5, it also executes steps 131 and onward. When an event in which the information program 10 should be transferred to another information terminal 5 has occurred (step 132), the information terminal 5 acquires a transfer destination address (step 133) and transfers the information program 10 to the information terminal 5 specified by the transfer destination address (step 134). Generally, the transfer destination of the information program 10 is determined by the owner of the destination information terminal 5. An alternative embodiment would be such that the information terminal 5 itself contains a transfer destination list and the information 6 is transferred to the corresponding information terminal 5.

When executed, the information program 10 acquires the address of the information terminal 5 where the information program 10 itself exists (step 140), adds that address to the transfer route list storage section 53 (step 141) and displays the information 6 on the user interface 44 (step 142). Further, the information program 10 judges whether the information 6 has been used by the user (step 143). If it has been used, the information announcing server 1 is notified of the "type of use of information" and the "transfer route list" (step 144) and the execution of the program 10 is finished.

Here, the "type of use of information" means the type of use of the information 6 identified when some operation for using the relevant information 6 has been made, except for a case where the information 6 is left without use or retransmitted as it is to another information terminal 5.

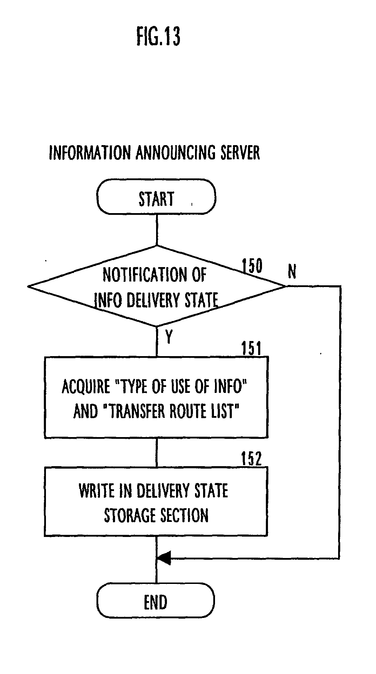

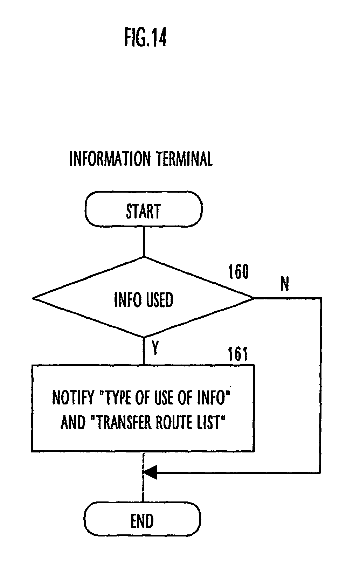

FIG. 13 shows operations of the information announcing server 1 performed when the "type of use of information" and the "transfer route list" are transmitted to the information announcing server 1, and FIG. 14 shows operations of the information terminal 5 performed in that situation.

When the information announcing server 1 has been notified of the information delivery state from the information terminal 5 (step 150), that is, when the notification of step 144 of FIG. 12 has been executed, the information announcing server 1 acquires the "type of use of information" and the "transfer route list" (step 151). Then, that information is stored in the delivery state storage section 25 (step 152).

Referring to FIG. 14, when the information has been used by the user and step 144 of FIG. 12 has been executed (step 160), the information announcing server 1 is notified of those pieces of information by the information program communicating section 43 (refer to FIG. 4).

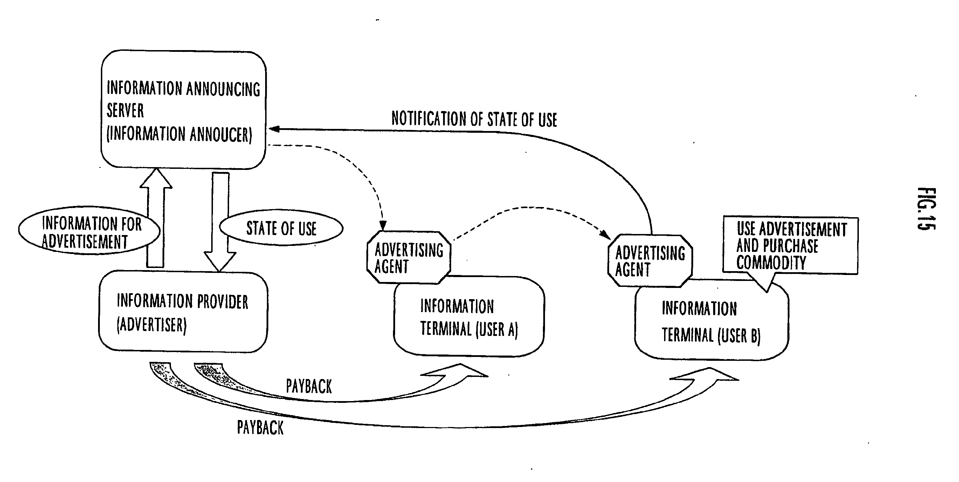

Described next is a practical example in which online advertisements of commercial goods are distributed using the aforementioned information delivery system. FIG. 15 is an overall configuration diagram of an online advertisement delivery system.

An online advertisement of commercial goods is an advertisement of commodities that can be ordered by use of a network. The general outline of the system is now described with reference to FIG. 15.
1. A user A enters commodity advertisement delivery registration into an information announcing server 1 using an information terminal a. The commodity advertisement delivery registration is an act of registering a request for delivery of an advertisement of a commodity.
2. An advertiser registers the advertisement of the commodity in the information announcing server 1 of an information announcer.
3. The information announcing server 1 converts the registered advertisement of the commodity into an agent and delivers the advertisement of the commodity to the registered user A using the agent system on the information announcing server 1.
4. The user A receives the agent and browses the advertisement of the commodity using the information terminal a in which the agent system is installed.
5. The user A transmits, without ordering the commodity, the agent to an information terminal b owned by a user B with an agent system similar to what is installed in the information terminal a of the user A installed in the information terminal b.
6. The user B browses the advertisement of the commodity displayed on the information terminal b using the agent received from the user A and orders the commodity on-line.
7. The agent in the information terminal b notifies the information announcing server 1 of the type of use of information (information on the ordered commodity) and the transfer route list (information terminal a to b).
8. The information announcing server 1 notifies the advertiser of the information notified by the agent.
9. The advertiser pays back profits individually to the users A and B.
10. The advertiser makes a payment to the information announcer for the announcement of the information.

When the online advertisement of commercial goods is distributed by use of the mobile agent as described above, it is possible to enhance the effect of advertisement by offering paybacks in return for the advertisement, enable an information provider 2 to easily recognize the state of use of the announced information by notification of the state of use from the information announcer to the information provider 2 and to analyze and judge the investment efficiency of information announcing.

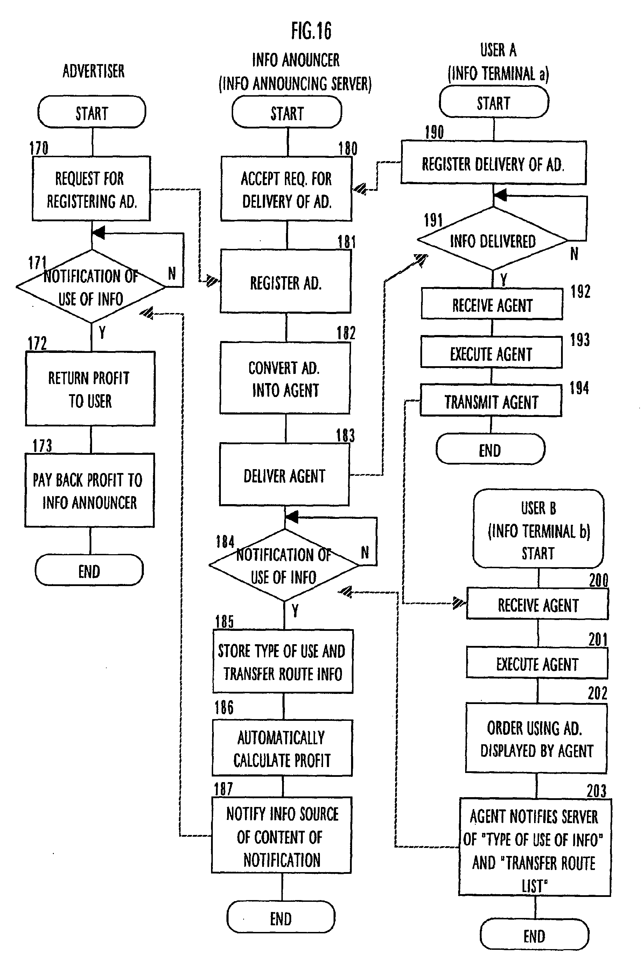

FIG. 16 is a flowchart depicting operations performed when the aforementioned online advertisements of commercial goods are distributed.

The advertiser makes a request for registration of an advertisement of a commodity to the information announcer (information announcing server) (step 170). When a notification of the use of information is received from the information announcer (step 171), a profit is returned to the user according to the content of the notification (step 172) and a profit is paid to the information announcer according to the content of the notification (step 173). While automatic calculation of the amount of profit to be paid back is performed by the information announcing server 1, it may be executed on the side of the information provider 2.

When the request for registration of the advertisement of the commodity has been made by the advertiser in step 170, the commodity advertisement is registered (step 181) and that commodity advertisement is converted into an agent (step 182). The agent is then delivered to an information terminal (step 183), wherein the agent is delivered to the information terminal from which a request for delivery of commodity advertisements has been received in step 180. When a notification of the use of information is received from the side of the information terminal (step 184), the information announcing server 1 stores the "type of use of information" and the "transfer route list" (step 185), automatically calculates the amount of profit to be paid back (step 186) and notifies the information source (information provider) of such data content (step 187).

The user A makes registration for delivery of commodity advertisements in step 190. When the agent is delivered as a consequence (step 191), the information terminal a of the user A receives the agent (step 192) and executes it (step 193). Since the user A does not use the advertisement here, the user A transmits the agent to the information terminal b of the user B (step 194).

The user B receives the agent delivered from the user A (step 200), executes the agent (step 201) and places an order using the advertisement displayed by the agent (step 202). Then, the agent notifies the information announcing server 1 of the "type of use of information" and the "transfer route list" (step 203).

While the mobile agent is used as the information program 10 in the aforementioned practical example, the information program 10 need not necessarily be such a mobile agent. In addition, while the advertising information is used in the illustration of FIG. 15, information to be announced need not necessarily be the advertising information.

As thus far described, it can be expected in the first embodiment of the present invention that the information program 10 is sequentially transferred through a large number of information terminals only if the information program 10 is initially transmitted from the information announcing server 1 to a particular information terminal. It is therefore possible to easily achieve promulgation of the information 6.

Also, since the information program 10 memorizes the transfer route list indicating the path of flow of the information program 10 itself, the information announcing server 1 can recognize the information terminal (user) to which the information 6 has been delivered and to know the rate of use of the information 6 in relation to the number of deliveries of the information 6. This makes it possible to recognize the needs of users and analyze what kinds of information meet the needs of the users on the side of the information announcing server 1. Furthermore, as it becomes possible for the information announcing server 1 to provide information provider 2 with the results of analysis of what kinds of information have been widely promulgated, the information provider 2 can easily recognize the relationship between the kinds and contents of information and the effects of its promulgation.

Furthermore, as the information provider 2 like the advertiser calculates the amount of profit to be paid back based on such factors as the number of deliveries of the information 6 and the rate of use of the information 6, it is possible to promote promulgation of information 6 and make paybacks to users and those from advertisers to the information announcing server 1 appropriate.

Next, a second embodiment of the present invention is described below.

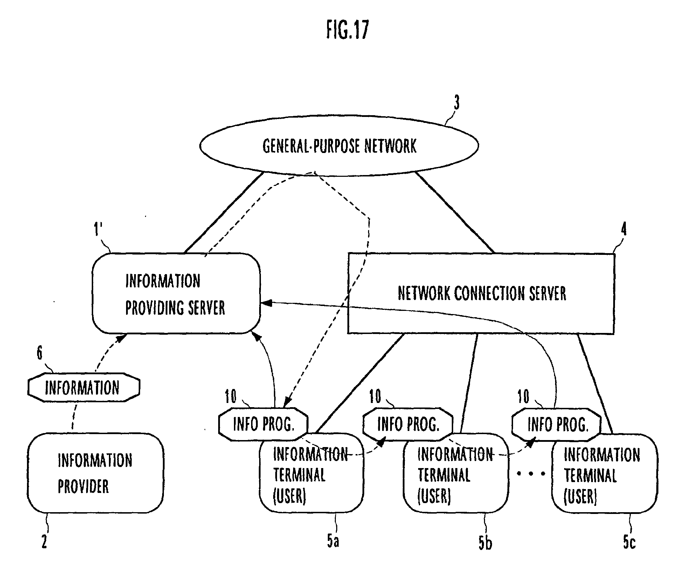

Shown in FIG. 17 is an information delivery system including an information announcing server according to the second embodiment of the invention. Compared to the conventional system shown in FIG. 1, the information delivery system of the Figure differs in that an information program 10 transfers from one information terminal to another without going through a server. While this information delivery system is similar to the information delivery system of the first embodiment shown in FIG. 2, a main difference between the two systems is that, while the information delivery system of the first embodiment uses the information announcing server 1 as a server, the information delivery system of the second embodiment uses an information providing server 1'. Unlike the information announcing server 1 which delivers information to unspecified information users, the information providing server 1' delivers information to specific information users.

In FIG. 17, elements identical to those shown in FIG. 2 are designated by the same numerals.

The information program 10 is what is output when information 6 provided by an information provider 2 is processed by the information providing server 1'. After the information program 10 has been produced by the information providing server 1', it is transmitted to an information terminal 5 predetermined in the information providing server 1' as a destination of delivery via a general-purpose network 3. This information program 10 is movable to and from information terminals 5, and a transfer destination address list is memorized in the program 10. This transfer of the information program 10 to and from the information terminals 5 is accomplished by transmit-receive operation via the general-purpose network 3 or by transmit-receive operation via other form of a wired or wireless network. In the present discussion, the type of means for transferring the information program 10 between the information terminals 5 does not matter. Rather, any transfer means, which is currently available or will become available in the future, may be employed.

While the information program 10 can execute specific functions as a program itself, it is necessary that an environment for running the program be available in the individual information terminals 5. This environment can be realized by software (which is usually referred to as middleware) installed in an operating system (OS) or in its upper layer within the individual information terminals 5. With this feature, the information program 10 accomplishes its inherent functions on the individual information terminals 5. In this embodiment, the information program 10 has the following functions (a) to (c):
(a) An information storage section for storing information to be displayed on each information terminal 5;
(b) A section in which the addresses of the information terminals 5 which become destinations of transfer are stored in the form of a "transfer destination address list"; and
(c) A section for transmitting the state of use of the information stored in the aforementioned information storage section as the "type of use" from each information terminal 5 to a server like the information providing server 1'.
   The function (a) above is a function for displaying the information 6 on a display device of the information terminal 5. For this purpose, the information storage section for storing the information 6 is provided in the program 10.
   The function (b) above is a function for storing the address of the destination information terminal 5 in the form of a transfer destination address list when the information program 10 is transferred from one information terminal 5 to another.
   The function (c) above is a function for transmitting the state of use of information determined according to a user input (e.g., the state in which the user enters a purchase order when the information is concerned with an article for sale) as the type of use of information to the information providing server 1' when the information program 10 has been executed. The destination of transmission need not be the information providing server 1' but may be other server. The functions (a) to (c) above are identical to the functions (a) to (c) of the first embodiment of the invention.
   In this embodiment, the information delivery system operates as described in the following when the aforementioned information program 10 is installed in the system.
   Referring to FIG. 17, the information program 10 produced based on the information 6 provided by the information provider 2 is prepared in the information providing server 1' in an initial stage. At this point in time, a list of information terminals 5 to which the information program 10 is to be transmitted is already produced in the information providing server 1' and a transfer destination address list generated based on that list is contained in the information program 10. The information providing server 1' transmits the information program 10 to an information terminal 5a having a first address in the transfer destination address list. When the information program 10 is executed in the information terminal 5a, the information 6 is displayed on the information terminal 5a by the aforementioned function (a) of the information program 10. If the user has no intention to use the relevant information 6, that is, the information 6 is concerned with an article for sale and the user has no intention to purchase it, for instance, the information program 10 is transferred to another information terminal 5b. Here, this another information terminal 5b is an information terminal which can communicate with the information terminal 5a and is an information terminal whose address is next to the address of the information terminal 5a in the transfer destination address list stored in the information program 10.
   In the example shown in FIG. 17, it is assumed that the user of the information terminal 5b does not use the information 6. Regardless of whether the user of the information terminal 5b use this information 6, the information program 10 transmits itself to an information terminal of a succeeding address in the transfer destination address list stored in the program 10. The information program 10 is successively transferred from one information terminal 5 to another referring to the transfer destination address list stored in the program 10 in this manner. In a case where a particular information terminal 5 wishes to use the information 6 while the program 10 is being transferred, the type of use of information is transmitted to the information providing server 1' by the aforementioned function (c). When the information program 10 reaches a last information terminal 5c, it then returns to the information providing server 1'. The information program 10 need not necessarily return to the information providing server 1'. For example, the information program 10 may be programmed such that it would disappear after a specific period of time has elapsed.
   In a case where the user of a particular information terminal 5 uses the information 6, if that information 6 is concerned with an article for sale and the user intends to purchase it, for instance, the user enters a specific instruction by using a user interface. Then, the information program 10 transmits the state of use of the information 6 as the type of use of information to the information providing server 1'. By analyzing the content of the received information program 10, the information providing server 1' verifies the intention of the user of the information terminal 5 to purchase the relevant article.
   While the aforementioned information delivery system has been described as being provided with the three information terminals 5a-5c, the system would operate similarly even when the number of information terminals is several hundreds or tens of thousands. The information program 10 is sequentially transferred through a plurality of information terminals 5 on the transfer destination address list preset in the information program 10 as described above. Therefore, an information processing section on the information providing server side can avoid vainly providing the information 6 and to enhance the efficiency of providing the information 6 by processing information in such a manner that the information program 10 has a transfer destination address list including only those users who want the information 6 or who wish to provide the information 6.
   Also, if the aforementioned transfer destination address list is made as a list of more than one group selected from a plurality of groups, it becomes possible to classify users. As a result, it becomes possible for the information providing server 1' to select, based on the type or contents of a commodity or service intended to be provided, a list of users who are supposed to be able to purchase the relevant commodity or service, such that the information program 10 would be transferred among the users on the list only. This would further enhance the efficiency of providing the information 6.
   In this latter case, if transfer destination address lists are weighted and the information program 10 is first, transferred among users on a heavily weighted list, it is possible to complete the sale of commodities or other commercial transactions more quickly. As an example, a transfer destination address list corresponding to a list of most frequently purchasing users or to a list of users earning highest annual incomes is prepared at first, and the information program 10 is transferred among information terminals 5 on this list. If commodities are left at the end of program transfer, a transfer destination address list corresponding to a list of next to the most frequently purchasing users or a list of users earning next to the highest annual incomes is prepared, and the information program 10 is transferred among information terminals 5 on this list.
   Furthermore, it is possible to configure the information providing server 1' such that it does not further prepare a weighted transfer destination address list and terminates transfer of the information program 10 when a situation in which specific conditions are met has occurred, such as when the stock of commodities has been exhausted halfway.
   A plurality of weighted transfer destination address lists may be preincluded in the information program 10 itself or the information providing server 1' may set each individual list in the information program 10.
   If this kind of lists are used, it is not necessary for the information providing server 1' to transmit the information 6 to all users when a consumable, such as a commodity, service or real estate to be offered for sale, occurs and to deliver the information 6 in the order of users having higher possibilities of purchasing.
   The information terminal 5 connected to the information providing server 1' via the general-purpose network 3 is constructed as described below.
   Specifically, the information terminal 5 has an information program transmit-receive section for receiving the aforesaid information program 10 from the information announcing server 1' or for exchanging the information program 10 with another information terminal 5 without going through the information announcing server 1', an information program execute section for executing the information program 10, and a user interface for displaying the result of execution by the information program execute section and for allowing user inputs in response to the displayed content.
   It is necessary for the information terminal 5 to have a function of executing the information program 10. When an ordinary personal computer is used as the information terminal 5, it is necessary to have a virtual machine (Java VM) based on Java, for instance, for executing the information program 10 as well as a program that runs on the Java VM. This program and the information program 10 of this embodiment might be together referred to as an agent system in the explanation of the embodiment. These programs, when written in Java, might also be referred to as a Java agent system. In this embodiment, the information program 10 corresponds to an agent, and because the information program 10 has a function of transferring between the information terminals 5, the information program 10 might also be referred to as a mobile agent.
   The information terminal 5 has its information program transmit-receive section for receiving the information program 10 which is a mobile agent and for exchanging the information program 10 with another information terminal 5 without going through the information providing server 1'. The information terminal 5 also has an information program execute section for executing the information program 10, as well as a user interface for displaying the results of execution by the information program execute section and for allowing user inputs in response to the displayed content. The information program 10 has the following section in addition to the aforementioned sections (a) to (c):
(d) A section for deleting the information program 10 in the source information terminal 5 when the information program 10 has been transferred to another information terminal 5.
   Since the information program 10 has such a function, only one information terminal 5 has the information program 10 as it transfers through the information terminals 5.
   By making the information program 10 alone among the information terminals 5 in this fashion, it becomes possible to treat the information program 10 as a right of access to the information providing server 1' for purchasing or inquiring about commodities or services. In other words, only a user having this right of access can carry out a procedure for purchasing a commodity or a service with the information providing server 1', and when the user handed over that right to a next user, it is possible to regard that the first user surrendered the right at the moment of handover. The above discussion applies similarly to a right of access to introduction of real estate, that is, it is possible to treat only such a user that has the right of access as the user capable of obtaining detailed information on that real estate. In the case of the real estate, the information 6 may be stored in a categorical arrangement such that the information terminal 5 having the access right can obtain more detailed information. When introducing real estate, for example, the information providing server 1' may store summarized information and detailed information on the real estate such that only the user having the access right can obtain the detailed information.
   Since whether the user has the information program 10 or not can be regarded as whether the user has the access right or not as described above, it is possible to prevent a rush of purchase orders or to efficiently accomplish the task of selling within a period of validity. In addition, categorization of information makes it possible to differentiate pieces of information that may be provided according to the availability of the access right.
   In the second embodiment of this invention, the information program 10 has the following section in addition to the aforementioned sections (a) to (c):
(e) A dwell time limit control section for limiting the period of time during which the information program 10 stays in one information terminal 5 so that the information program 10 is automatically transferred to a next information terminal 5 when the period of time has elapsed.

Also because the information program 10 has such a function, only one information terminal 5 has the information program 10 as it transfers through the information terminals 5 in the same way as previously described. Moreover, since the period of time during which the information program 10 stays in one information terminal 5 is a specific period of time, the information program 10 would be transferred to a next information terminal 5 unless the user does not express his or her intention to purchase.

This information program 10 makes it possible to efficiently sell tickets, for example, of which validity is limited in time. Specifically, only a user having this information program 10 (access right) can carry out a procedure for purchasing for tickets of which validity is limited in time with the information providing server 1'. Then, when the validity expires, the access right is lost and transferred to the owner of the next information terminal 5.

Since whether the user has the information program 10 or not can be regarded as identical to whether the user has the access right or not, and dwell time of the information program 10 is limited as described above, it is possible to efficiently sell commodities and services within a predefined period of time.

According to the information delivery system and method of providing information of the second embodiment of the invention, it is possible to deliver the information to only necessary users (information terminals 5) by incorporating an information program transfer destination address list produced in accordance with characteristics of the information on the side of the information providing server 1'. Also, on the user side, it is possible to prevent unnecessary information from being delivered to the user.

On the side of the information provider 2, it is possible to deliver the information 6 to a group of frequently purchasing people, a group of people earning higher annual incomes only or, conversely, to people earning lower annual incomes only, and avoid vainly delivering the information 6, for example; by classifying the users.

Also, by allowing only those people who have the right of access to the information providing server 1' for purchasing rare goods or receiving an introduction of their information to purchase them or receive their introduction, it is possible to prevent a rush of purchase orders or inquiries or scrambling for the purchase of an offered commodity or a service, thus ensuring efficient distribution of the information 6.

With respect to information on tickets of which validity is limited in time, for instance, it is possible to complete the sale of the commodity like tickets within a predefined period of time by limiting the duration of time that the information program 10 stays in each information terminal 5.

In the present embodiment, the contents of the information 6 are not particularly limited. Rather, it may include any kind of consumables, such as commodities, services or real estate, and the contents obtained by the aforementioned access right could include every kind of right in commercial transactions concerning sale, introduction, rentals, leases, and so on.

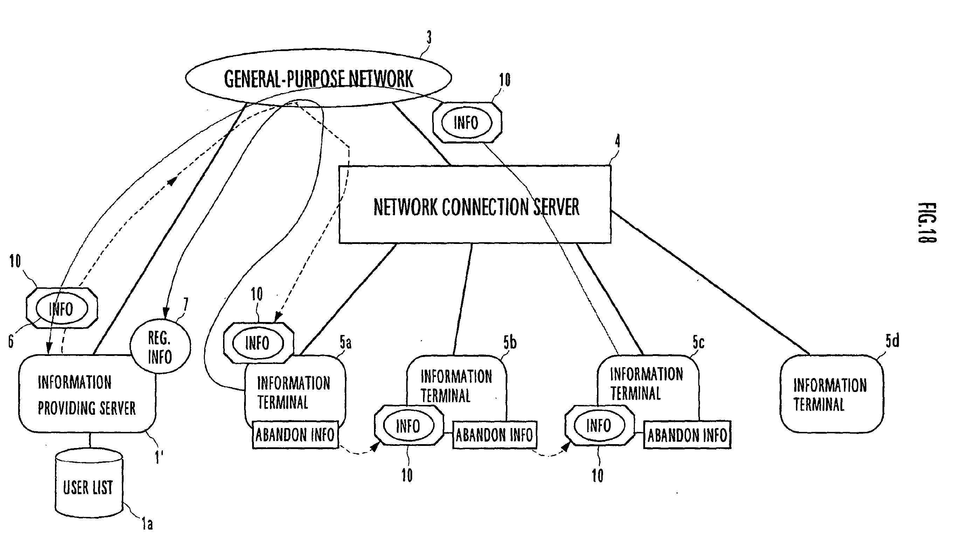

An information delivery system using the Internet is now described as a specific example. FIG. 18 is an overall configuration diagram of the information delivery system using the Internet.

A network of the Internet is used as the general-purpose network 3, a server operated by an Internet provider constitutes a network connection server 4, and ordinary personal computers correspond to the information terminals 5 (5a, 5b, 5c, 5d). The information terminals 5 may be mobile telephones connectable to the Internet. As will be described later, the structure of each information terminal 5 is such that a Java virtual machine serving as a virtual machine runs under an OS of a personal computer, whereby the entire personal computer works as the Java virtual machine. Installing the Java virtual machine makes it possible to run the information program 10 regardless of the type of the OS installed in each information terminal 5.

The information providing server 1' has a user list 1a. This user list 1a is what has been generated from user information obtained by the information provider 2 by some means. This means for obtaining the user information is of no importance. In FIG. 18, registration information 7 for the information terminal 5a (including information wanted by the user of the information terminal 5a) entered through the Internet is used for generating that list 1a.

The user list 1a may be either a list for a single group or a group list for a plurality of groups of users divided in accordance with annual incomes, hobbies, ages or areas, for instance, as will be explained later.

The information providing server 1' generates by using its information program processing section (information processing section) an information program 10. This information program 10 includes in itself, together with the information 6, a list of transfer destination addresses to which the information 6 should be conveyed. When the information program 10 is transmitted to the information terminal 5a at the top of the list, the information program 10 transfers by its own function from one information terminal 5 to another.

In the configuration shown in FIG. 18, the information program 10 is transmitted from the information providing server 1' to the first information terminal 5a (user) on the list and conveyed sequentially through the information terminals 5 in the order defined on the list. When the information program 10 has been transferred to the last information terminal 5c on the list, the information program 10 returns to the information providing server 1'. While the information program 10 is being transferred, the information program 10 is abandoned by the information terminal 5a and by the information terminal 5b in succession, and finally used by the information terminal 5c in the example shown in FIG. 18.

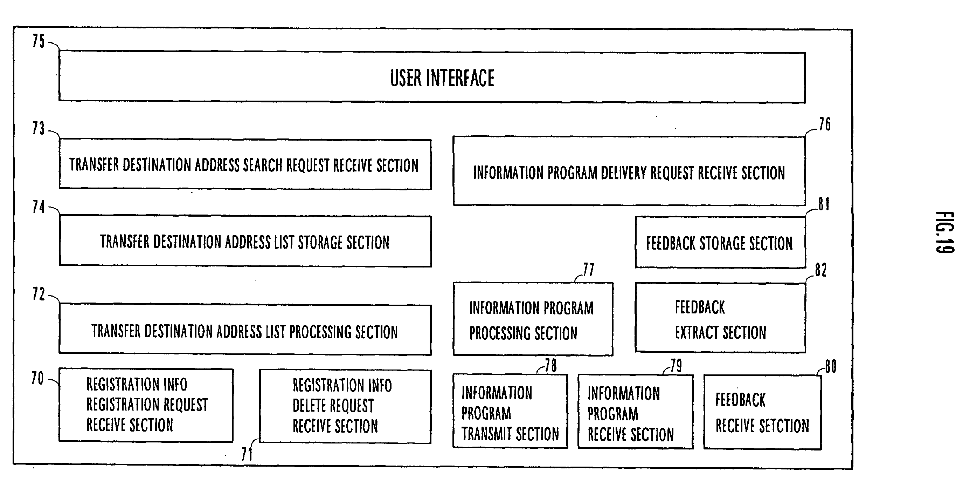

FIG. 19 is a functional configuration diagram of the information providing server 1'.

A registration information registration request receive section 70 and a registration information delete request receive section 71 receive a request for registration of information from any information terminal 5 of the own system which wishes to acquire from the other information terminals 5 connected to the Internet (on the network) and a request for deletion of the information, respectively, and convey the received information to a transfer destination address list processing section 72.

Based on the registration information 7 received from the information terminal 5, the transfer destination address list processing section 72 requests a transfer destination address search request receive section 73 to read out a transfer destination address list to be processed and acquires it in response to the request. The transfer destination address list processing section 72 then adds the information terminal 5 which has made the request to the acquired transfer destination address list.

A transfer destination address list storage section 74 stores the categorized transfer destination address list.

The transfer destination address search request receive section 73 provides a required transfer destination address list in accordance with a request from a user interface 75 or the transfer destination address list processing section 72.

An information program delivery request receive section 76 receives an information program transmit request from the user interface 75.

An information program processing section 77 converts information into an information program 10, adds the transfer destination address list to the information program 10 and sets an information terminal dwell time limit in accordance with an information program delivery request.

An information program transmit section 78 transmits the processed information program 10. An information program receive section 79 receives the information program 10 from any of the information terminals 5.

A feedback extract section 82 extracts feedback information (type of use of information) from the information program 10 received from the information terminal 5 and stores the feedback information in a feedback storage section 81.

The user interface 75 handles input of information 6 provided by the information provider 2 to users, selects the desired transfer destination address list specifying addresses to which the information 6 is to be conveyed, and outputs a user feedback in response to the provided information 6.

A feedback receive section 80 directly receives the feedback information from the information terminal 5 to which the information program 10 has been transferred.

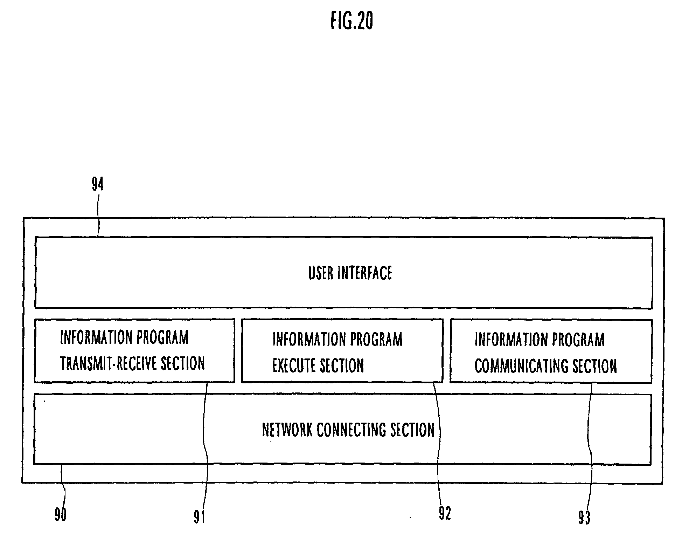

FIG. 20 is a functional configuration diagram of the information terminal 5.

A network connecting section 90 communicates with the network connection server 4 to establish and maintain connections of the information terminal 5 to the network.

An information program transmit-receive section 91 receives the information program 10 transmitted from the information providing server 1' or from any of the other information terminals 5 or transmits the information program 10 to any of the other information terminals 5.

An information program execute section 92 executes the received information program 10. The result of execution of the information program 10 is displayed on a user interface 94.

An information program communicating section 93 performs a function of enabling the information program 10 with the information providing server 1'.

The user interface 94 displays the result of execution of the information program 10 and accepts user inputs.

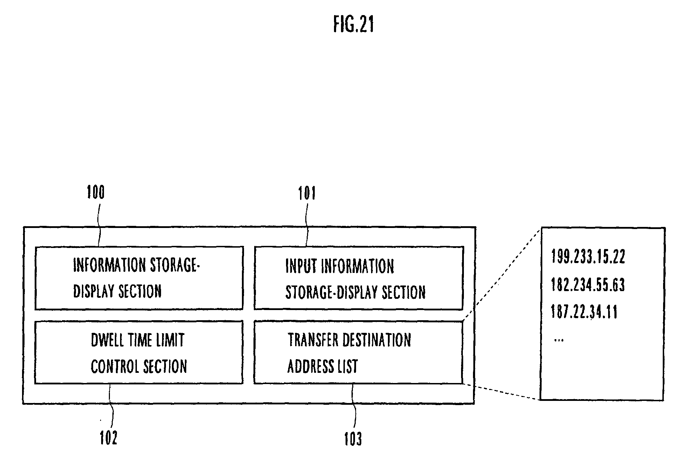

FIG. 21 is a functional configuration diagram of the information program 10.

An information storage-display section 100 stores the information 6 which may be provided and displays the information 6 on the user interface 94 of the information terminal 5.

A feedback information storage-display section 101 stores feedback information input from the information terminal 5 and displays it on the user interface 75 of the information providing server 1'.

A dwell time limit control section 102 stores keep-alive time of the information program 10 on the information terminal 5 and controls its dwell time.

A transfer destination address list 103 stores a list of the addresses and the order of the information terminals 5 through which the information program 10 is transferred. While the Figure shows an example in which the addresses are registered in a correct sequence, their registration is not limited to the illustrated form of the example. The addresses may be any references which enable identification of users or the information terminals 5 of the individual users, such as mail addresses, telephone numbers or IP addresses.

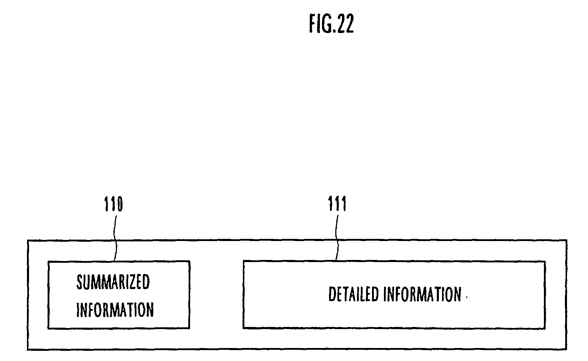

FIG. 22 is a configuration diagram of the information 6.

The information 6 includes summarized information 110 and detailed information 111. The summarized information 110 holds an outline of the information 6 to be provided while the detailed information 111 holds details of the information 6 to be provided.

When the information program 10 is used as the right of access to the information provider, the information program 10 holds the summarized information 110 only. (The information program 10 transferred through the information terminals 5 of the individual users contains the summary of the information 6 to be provided. Each user possessing the summary of the information 6 has the right of access to the detailed information 111 of the information 110.)

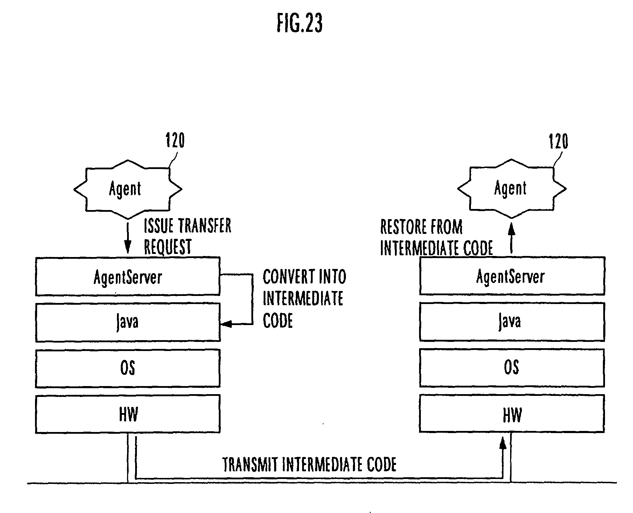

In this embodiment, the information program 10 and a functional program having the aforementioned functions of FIGS. 19 and 20 are configured by a mobile agent system. This mobile agent system includes all of the functional sections of the information program 10 of FIG. 21, the functional sections of the information announcing server 1' of FIG. 19 and the functional sections of the information terminal 5 of FIG. 20. The information program 10 is a mobile agent which transfers from one information terminal 5 to another. The mechanism of this mobile agent system in which the agent corresponding to the information program 10 transfers in succession is briefly explained with reference to FIG. 23.

As this mobile agent system constitutes programs which are actually situated on an upper layer of the Java placed on an upper layer of the OS and run on the Java virtual machine, the programs are referred to as Java mobile agents.

When a mobile agent transfers from one information terminal 5 to another information terminal 5, the mobile agent becomes absent in the source information terminal 5. Specifically, when the mobile agent transfers to another information terminal 5, the mobile agent in the source information terminal 5 is deleted. As a result, the mobile agent transferring between the information terminals 5 are not duplicated but only the single mobile agent transfers from one information terminal 5 to another in succession.

As shown in FIG. 23, the OS, Java and Agent Server are stacked in this order on top of hardware HW in each information terminal 5, where Agent Server is middleware. Referring to FIG. 23, let us now assume a situation in which a mobile agent 120 is present in the information terminal 5 connected to a node on the left side and this mobile agent 120 transfers to the information terminal 5 connected to a node on the right side. The mobile agent 120 issues a transfer request to the Agent Server. As a result, the Agent Server converts the transfer request into an intermediate code which is communicable through the network and delivers it to Java in the lower layer. This intermediate code is transmitted to the intended information terminal 5 and reconverted into an original code by the Agent Server to restore the agent 120. When the agent 120 is reconstructed in the information terminal 5 on the right side and the information terminal 5 on the left side receives this result, the agent 120 in the information terminal 5 on the left side is deleted so that the agent 120 does not exist therein. This delete operation is undertaken by the Agent Server.

Described next are practical examples of information delivery methods according to the foregoing embodiment.

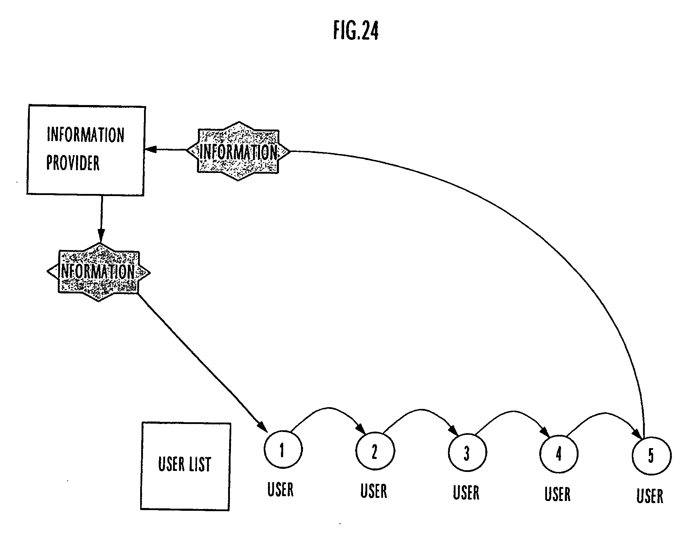

FIG. 24 shows a first practical example according to the aforementioned second embodiment of the invention.

In the first practical example, information 6 is provided to all members on a list of users who have been classified and registered. Referring specifically to FIG. 24, it is possible to sequentially provide the information 6 to the users on the user list 1a selected by an information provider 2 starting from the user at the top of the user list 1a, circulate the information 6 while confirming the intention of each user to access the information provider 2 or the detailed information 111, and feed back comments on the provided information 6 from the individual users to the information provider 2. With this arrangement, requirements of the users are fed back based on the information 6 provided by the information provider 2, so that the information provider 2 can provide better information.

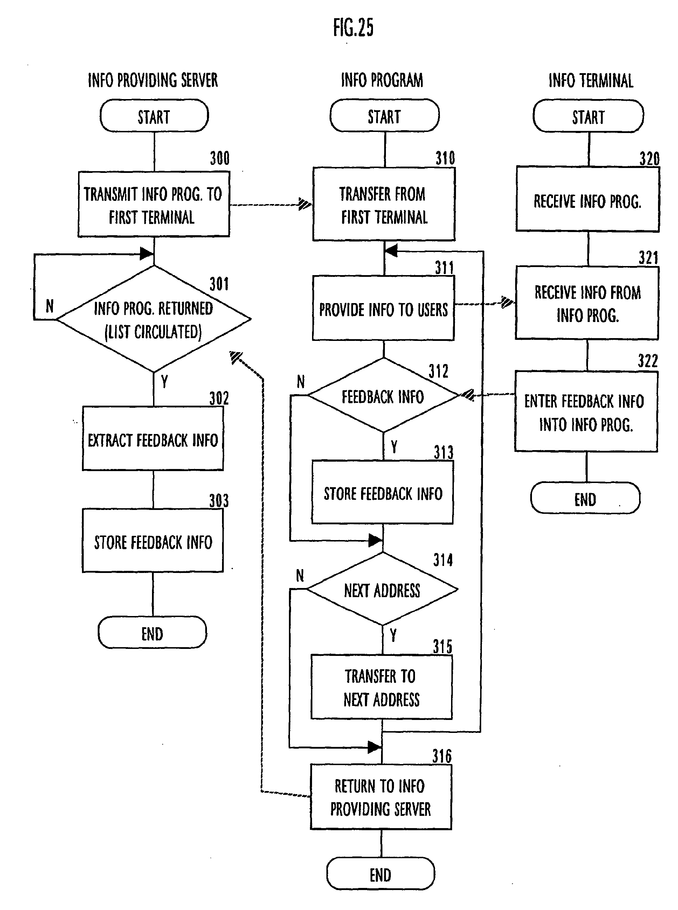

FIG. 25 is a flowchart showing detailed operations of the first practical example shown in FIG. 24. In the information providing server 1', the information program processing section 77 (refer to FIG. 19) sets together with the transfer destination address list 103 together with the information 6 in the information program 10 based on the user list 1a and transmits the information program 10 to the information terminal 5 having a top address on the transfer destination address list (step 300). In step 301, a judgment is made to determine whether the information program 10 has returned (that is, whether the information program 10 has circulated through all the information terminals 5 on the transfer destination address list. If the information program 10 has circulated around, feedback information is extracted (step 302). Then, the feedback information is stored in the feedback storage section 81 (refer to FIG. 19) and the operation flow is completed. The feedback information mentioned above is the type of use of information stored in the storage section (feedback information storage-display section 101 of FIG. 21) for storing the information of the information program 10.

The information program 10 is sequentially transferred through the information terminals 5 starting from the information terminal 5 at the top of the transfer destination address list in step 310 to provide the information 6 to the users (step 311). If any feedback information is entered from one of the information terminals 5 (step 312), the feedback information is stored in the feedback information storage-display section 101 of FIG. 21 (step 313). If a next address is left on the transfer destination address list, the feedback information is transferred to the information terminal 5 of that address (steps 314, 315). If the last information terminal 5 has been reached, the information program 10 is returned to the information providing server 1' (step 316).

When one information terminal 5 receives the information program 10 from the information providing server 1' or from another information terminal 5 through the information program transmit-receive section 91 (refer to FIG. 20) (step 320), the information terminal 5 receives the information 6 from the information storage-display section 100 (refer to FIG. 21) of the information program 10 (step 321) and displays the information 6. Should there be any feedback information, the information terminal 5 enters it into the feedback information storage-display section 101 of the information program 10 (step 322).

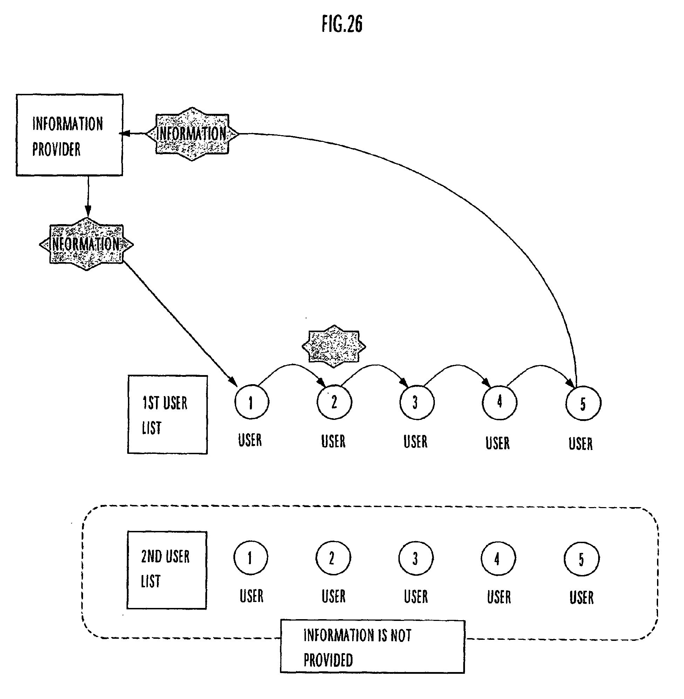

FIG. 26 shows a second practical example.

In this second practical example, information 6 which individual users wish to obtain is preregistered to an information provider 2. After this preregistration, the information provider 2 classifies the users according to registration information 7 and generates user lists for individual categories. The information provider 2 selects from the previously categorized user lists the first user list including users who are presumably wishing to obtain the information 6 and sequentially provides the information program 10 to the users on the selected first user list starting from the user at the top of the first user list. The information provider 2 does not provide the information program 10 to the users on the second user list.

In this method, the information program 10 is not provided to the users to whom the information program 10 need not be provided, so that it is possible to efficiently provide the information 6.

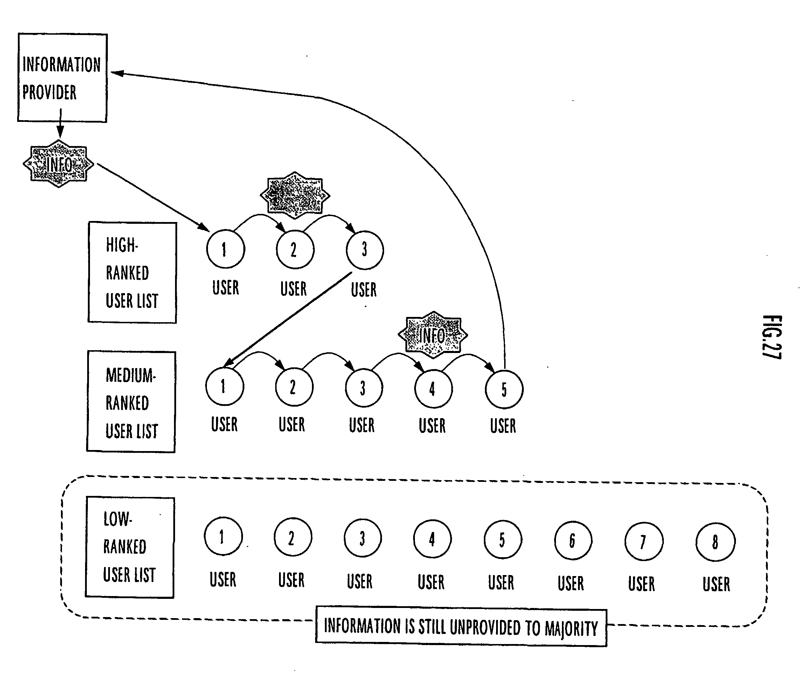

FIG. 27 shows a third practical example.

In this third practical example, an information provider 2 classifies in its own way individual users and produces ranked user lists (weighted transfer destination address lists) beforehand. The information provider 2 selects a high-ranked user list from the user lists and sequentially provides the information program 10 to the users on the selected user list starting from the user at the top of the high-ranked user list. Upon completely providing the information program 10 to all members of the high-ranked user list, the information provider 2 then provides the information program 10 to the users on a medium-ranked user list starting from the user at the top of the medium-ranked user list. If such information as "Nobody knows - This is your exclusive bargain goods information" is added to the information program 10 when providing the information 6, it is possible to generate in the mind of the users a feeling of superiority as to their status, which will more attract the users. Criteria used for ranking the users may be annual income, area, age or sex.

With transfer destination address lists corresponding to the high-ranked user list and the medium-ranked user list stored in the information program 10 beforehand, the information program 10 which has circulated through the users on the high-ranked user list transfers through the users on the medium-ranked user list without once returning to the information provider 2 (information providing server 1'). The third practical example may be constructed such that the information program 10 once returns to the information provider 2 (information providing server 1') after circulating through the users on the high-ranked user list and then transfers through the users on the medium-ranked user list.

Alternatively, the third practical example may be constructed such that the information program 10 returns to the information providing server 1' from the last user of the currently circulating rank, when it is no longer necessary to transfer the information program 10 to users of further ranks. The situation in which the information program 10 need not be transferred to users of further ranks any longer is a case where the information 6 is concerned with commodities or the stock of such commodities has been exhausted, for example.

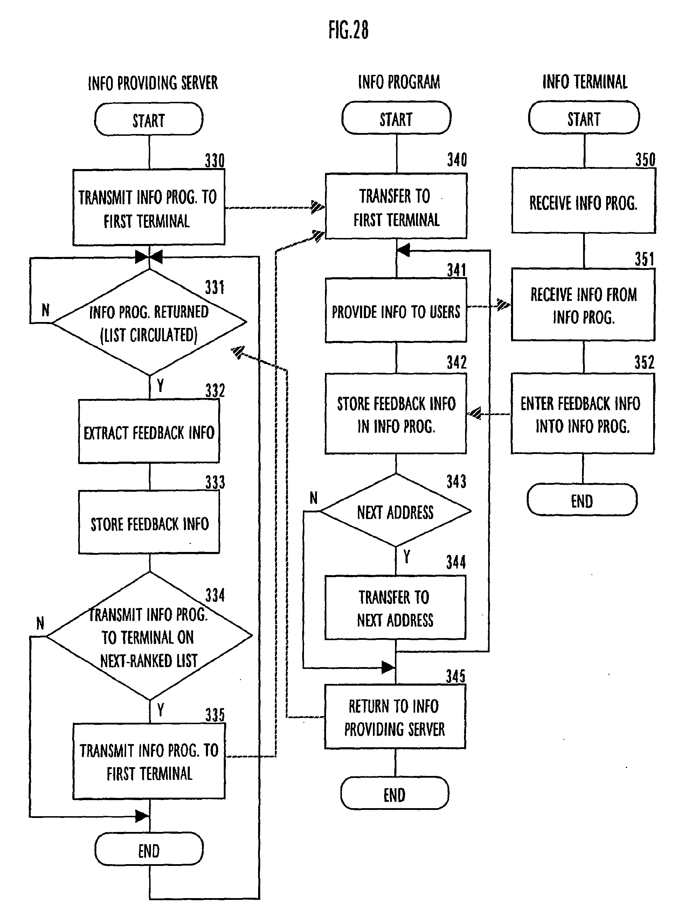

FIG. 28 shows operations of the third practical example.

Operations of the information providing server 1' shown in steps 330 to 333 are the same as steps 300 to 303 of FIG. 25. In step 334, the information providing server 1' judges whether to transmit the information program 10 to individual information terminals 5 on a next-ranked transfer destination address list. If the information program 10 is to be transmitted, the information providing server 1' transmits the information program 10 to the information terminal 5 at the top of the next-ranked transfer destination address list in step 335.

Operations of the information program 10 are the same as the operations shown in FIG. 25. The judgment of step 312 shown in FIG. 25 is not illustrated in FIG. 28.

Operations of the information terminal 5 are completely the same as the operations of the information terminal 5 of FIG. 25.

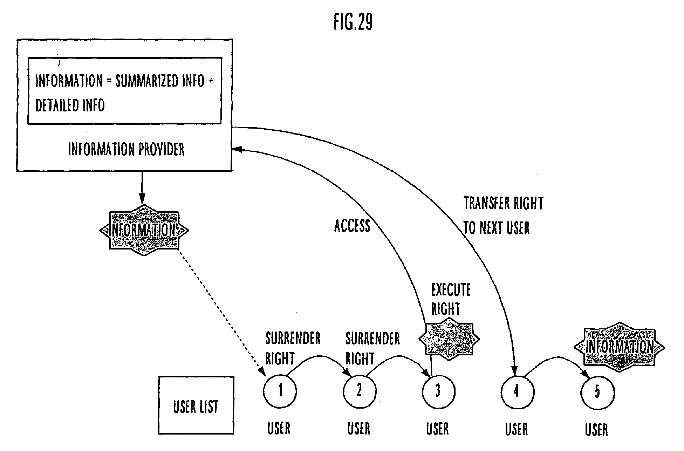

FIG. 29 shows a fourth practical example.

In this fourth practical example, an information provider 2 successively transfers the access right enabling individual information terminals 5 to access the information provider 2 starting from a user (information terminal 5) at the top of the transfer destination address list. The information provider 2 accepts access only from users having the access right. Thus, the users can not access the information provider 2 unless they have the access right. When any user has surrendered the access right, the access right is transferred to a next user on the user list. With this arrangement, the access right received from the information provider 2 would never be transferred to other users when the user retains the access right. As a result, only the user having the access right is allowed to exclusively access the information provider 2. In this example, it is also possible to feed back reasons why the user having the aforementioned access right has surrendered the right.

With respect to the foregoing, it is also possible to distribute information 6 by applying the access right of the example of FIG. 29 to the example of FIG. 28.

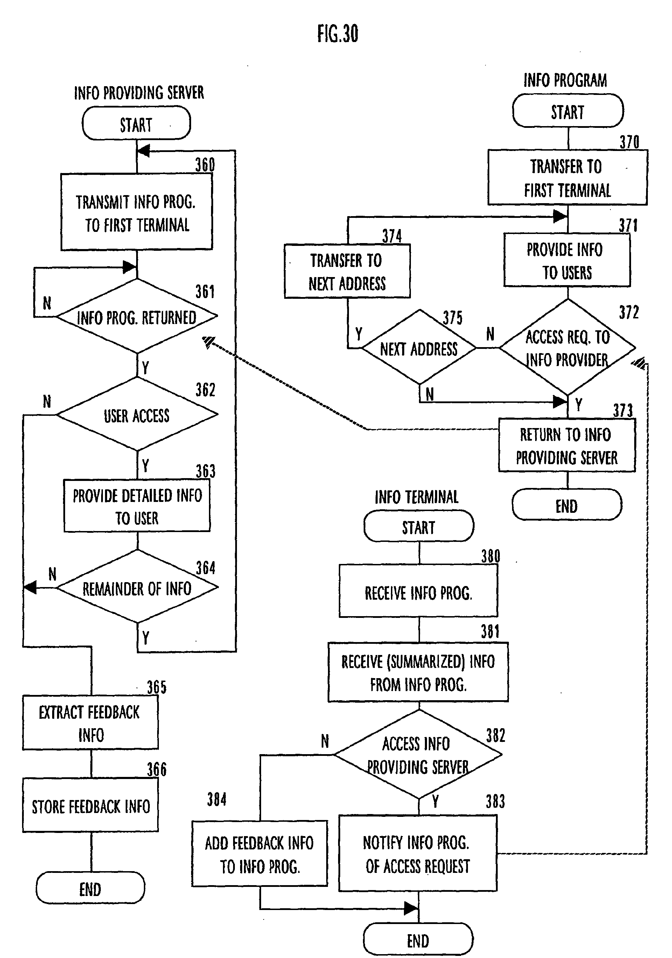

FIG. 30 shows operations of the fourth practical example. In this fourth practical example, only the user of the information terminal 5 in which the information program 10 is present have the access right to the information providing server 1'. It is possible by having the access right to execute a right of introduction to introduce a purchasing right to purchase commodities or services as well as an introducing right to introduce information on real estate.

The information providing server 1' transmits the information program 10 to the information terminal 5 at the top of the transfer destination address list in step 360 and judges whether the information program 10 has returned to the information providing server 1' in step 361. When the information program 10 has already returned, the information providing server 1' further judges whether there is any user access (step 362) and provides detailed information 111 if there is user access (step 363). If there is any remainder of information to be provided (step 364), the information providing server 1' returns to the earlier step 360 and reexecutes steps 360 and onward.

If there is no user access in the aforementioned step 362, or if there is no remainder of information to be provided in the aforementioned step 364, the information providing server 1' extracts feedback information (step 365), stores the feedback information (step 366) and the operation flow is completed.

The information program 10 is transferred through the information terminals 5 starting from the information terminal 5 at the top of the transfer destination address list (step 370) to provide the information 6 to the users (step 371). If there is a request for access to the information provider 2 (step 372), the information program 10 returns to the information providing server 1' (step 373). If there is no request for access to the information provider 2 in step 372, the information program 10 judges whether there is any next information terminal 5 left on the transfer destination address list (step 375). If there is left a next information terminal 5, the operation flow proceeds to step 374, in which the information program 10 is transferred to the next information terminal 5.

When one information terminal 5 receives the information program 10 in step 380, the same information terminal 5 has the right of access to the information providing server 1' from that point in time. The information program 10 receives the information 6 from the information program 10 and displays it in step 381. When accessing the information providing server 1' (step 382), the information terminal 5 requests access to the information program 10 (step 383). This step 383 means that the information terminal 5 has executed the introducing right to request further detailed information (such as the right to request introduction of detailed information on real estate). When not accessing the information providing server 1' in step 382, the information terminal 5 proceeds to step 384 and adds feedback information to the information program 10. If the information 6 is concerned with a commodity or service and the user performs an input for purchasing the same, the user executes its purchasing right. Information concerning the purchase is the feedback information. The access right occurs in step 380, the introducing right is executed in step 383 and the purchasing right is executed in step 384 in the aforementioned manner. When one information terminal 5 holds the access right, the other information terminals 5 do not have the access right.

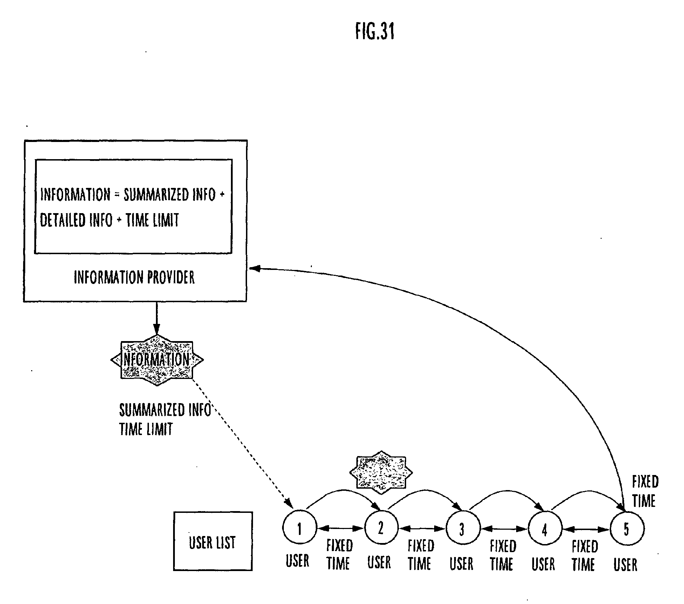

FIG. 31 shows a fifth practical example.

In this fifth practical example, an information provider 2 sequentially gives the right of access to the information provider 2 to users on a user list starting from the user at the top of the user list. When no response is made from the user within a specific period of time after information 6 has been provided to the user, the user loses the access right and the access right is transferred to a next user on the list. The information provider 2 accepts access only from users having the access right. Therefore, no user can access the information provider 2 without the access right.

According to this fifth practical example, only those users who have the access right can access the information provider 2 and the information 6 can be provided to all users within a predetermined period of time.

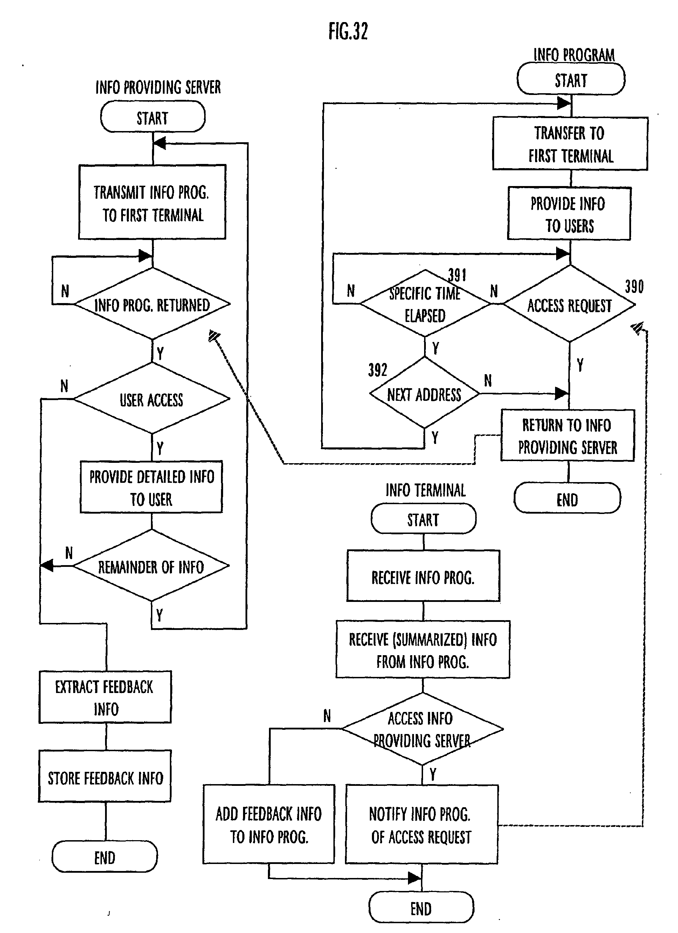

FIG. 32 shows operations of the fifth practical example. The fifth practical example, as compared to the operations of the fourth practical example shown in FIG. 30, is such that a judgment is made to determine whether the aforementioned specific period of time has elapsed in step 391 when the request for access to the information provider 2 does not occur in operational step 390 of the information program 10. The dwell time limit control section 102 of FIG. 21 can be used for making this judgment on the lapse of the specific period of time. If the predetermined time period has elapsed, the operation flow proceeds to step 392, in which the information program 10 judges whether there is any next information terminal 5 left on the transfer destination address list. If there is left a next information terminal 5, the information program 10 is transferred to that information terminal 5. Operations performed by the information providing server 1' and the information terminal 5 are exactly the same as those of the fourth practical example shown in FIG. 30.

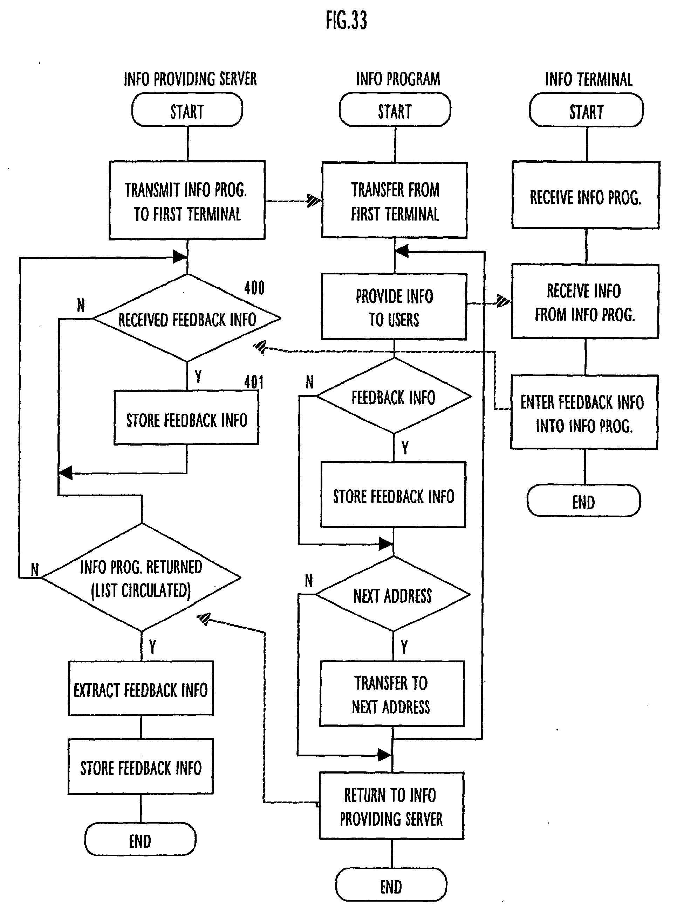

FIG. 33 shows operations of a sixth practical example.

In this sixth practical example, the information terminal 5 transmits feedback information directly to the information providing server 1' without having it pass through the information program 10. The sixth practical example of FIG. 33, as compared to the operations of the first practical example shown in FIG. 25, is such that a judgment is made on the side of the information provider 2 to determine whether the feedback information has been received directly from the information terminal 5 in step 400. If it has been received directly, the feedback information is stored in step 401. The feedback information may be returned directly from the information terminal 5 to the information providing server 1' in this fashion without passing through the information program 10.

Described next are more specific examples of applications of the information delivery system according to the second embodiment of the invention.

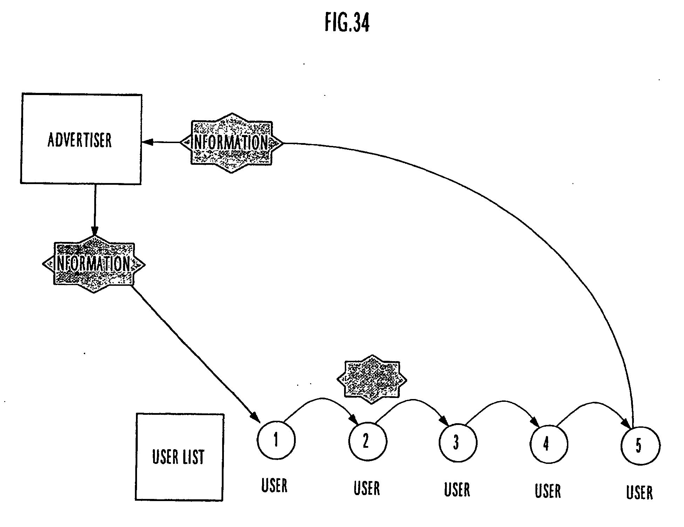

FIG. 34 shows a method of advertisement employing the information delivery method according to the first practical example shown in FIG. 24.

In this method of advertisement, the information provider 2 is an advertiser who announces and advertises in sequence according to the transfer destination address list. The method of this example could potentially be used as means for bargain sale advertisement of a supermarket or a department store, for example. If a retailer like a supermarket or a department store acting as an advertiser uses bargain sale advertisements or fliers as an information source and a list of newspaper subscribers as a user list, it is possible to use bargain sale information and shop information as means for advertisement which replaces newspaper inserts and fliers.

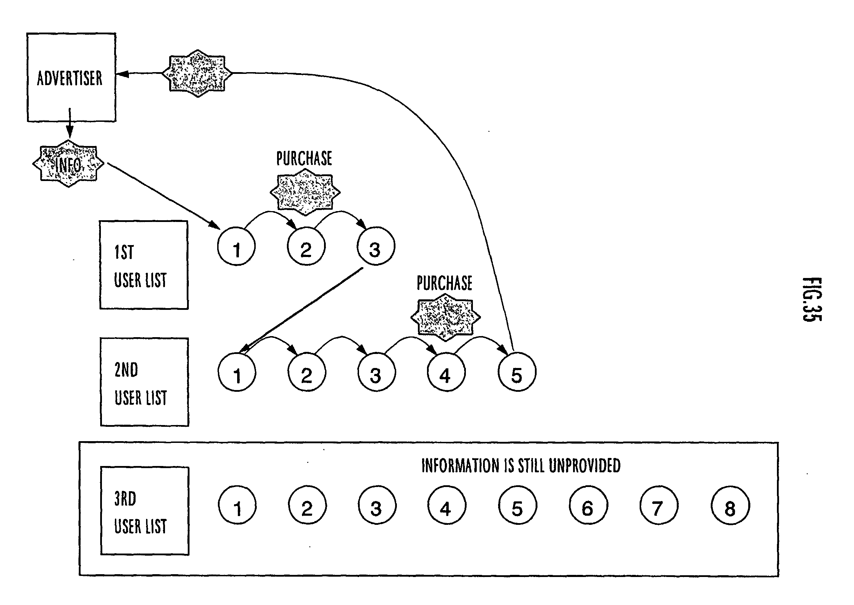

FIG. 35 shows an example in which the information delivery method of the third practical example shown in FIG. 27 is adopted as means for advertisement and guidance for individual credit card memberships.

If a credit card company or the like acting as an advertiser of FIG. 35 uses bargain goods information as the information 6 and a member list (e.g., a gold member list, an ordinary member list, a student member list or an annual-income-classified customer list) as a user list, for example, the advertiser could provide the information 6 to customers of the user list (who can purchase goods of $300, for example) in the order of their purchasing ability according to the price (e.g., $300) of the offered goods. This example provides such a service that enables the advertiser not to offer the goods (not to provide the information 6) to customers of user lists who are supposed to be unable to purchase.

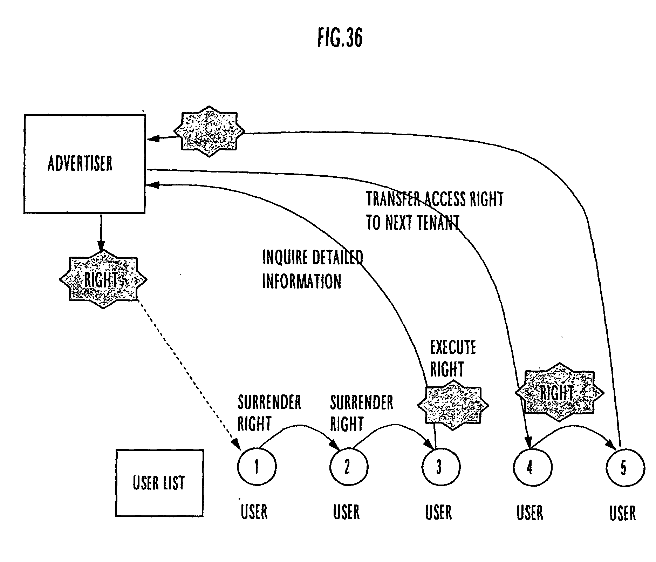

FIG. 36 shows an example in which the information delivery method of the fourth practical example shown in FIG. 29 is adopted as means for providing information on vacant rooms registered at a real estate company.

If the real estate company or the like acting as an advertiser of FIG. 36 uses a list of people looking for rooms as a user list, for example, this example offers a service described below, also facilitating prevention of a rush of inquiries about good rentals, shortening of time required for finding a tenant of a rental, as well as acquisition of information about potential tenants of a rental.

Specifically, the real estate company first provides information on vacant rooms to users in the order of the users shown on the user list. The real estate company, or the information providing server 1', holds the vacant room information in classified form including summarized information 110 and detailed information 111. Only those users who have the vacant room information have the right (access right) to inquire of the real estate company, acquire the detailed information 111 from the real estate company, and sign a rental contract if the room is preferable. The users having the access right can acquire more detailed information from the classified information. When the rental contract on a particular room has been entered into, the access right would not be transferred to a next user on the list because the room becomes no longer be available for rent. If the user does not prefer the room, he or she surrenders the access right. Then, the access right is transferred to the next user on the user list. If a potential customer does not prefer the room when he or she has received the access right, the user can return reasons why he or she does not prefer it (rent is too high, room layout is poor, public transport is poor, etc.) in the form of feedback information. The real estate company takes into consideration the reasons why the potential customer does not prefer. Considering a situation where there are many pieces of feedback information, such as a potential tenant would rent a room if it were 5,000 yen cheaper, the real estate company would provide the potential tenant with revised information offering a reduced amount of rent. The real estate company can find a tenant in a short period of tine in this fashion.

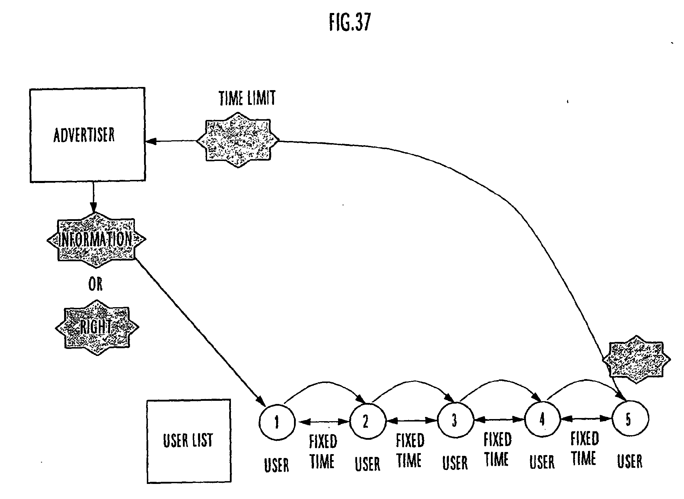

FIG. 37 shows an example in which the information delivery method of the fifth practical example shown in FIG. 31 is adopted as means for vending unsold tickets and canceled tickets.

If a ticket dealing company or the like acting as an advertiser of FIG. 37 uses a list of ticket purchasing members as a user list, for example, it is possible to efficiently sell unsold tickets or canceled tickets for a performance of which opening time is pressing as well as rare tickets for a performance just before its opening in a short period of time.

Specifically, the ticket dealing company first provides the access right to purchase rare tickets for a performance just before its opening to ticket purchasing members in their order shown on a ticket purchasing member list. A member who has received the access right and intends to purchase a ticket, the member accesses the ticket dealing company and purchases the ticket. If there are still unsold but sellable tickets, the access right is transferred to a next member on the ticket purchasing member list. When the unsold tickets have been sold out, the access right disappears and will no longer be transferred. In a case where the member who has received the access right does not respond within a specific period of time, or when the member does not purchase, the access right is automatically transferred to a next member on the list. If there are still unsold tickets even after the access right has been circulated around the members on the ticket purchasing member list, the company would reduce the price or otherwise revise conditions of sale and provide again the access right to the members starting from the member at the top of the ticket purchasing member list. A consideration given by the ticket dealing company would be as follows: the more tickets or the higher amounts of tickets a member purchases, the closer to the top of the ticket purchasing member list the member would be listed, and the easier would it become for the member to purchase rare tickets.

As dwell time of the access right to purchase tickets at each user is limited as described above, it is possible to efficiently sell the tickets within a specific period of time.

The method of FIG. 37 can also be used for an emergency correspondence network service.

If an airline company or the like acting as an advertiser of FIG. 37 uses flight information as the information 6 and a reserved passenger list as a user list, for example, it would become possible to notify would-be passengers of changes in departure time due to bad weather or troubles in an airplane within a specific period of time (e.g., within 30 minutes). This correspondence network service can also be used for a school correspondence network, an urgent correspondence network for notification of changes in lecture schedule at colleges, and for notification of time limits of various payments.

According to the second embodiment of this invention, it is possible to deliver information 6 only to those users (information terminals 5) who are supposed to need the information 6 by incorporating a transfer destination address list suited for characteristics of the information 6 of the information program 10 into the information program 10 itself on the side of the information providing server 1'. Also, on the user side, it is possible to prevent unnecessary information from being delivered to the user. Therefore, there is no waste of resources in the delivery of the information 6 and it is not necessary for the user to carry out a complicated operation of deleting unnecessary information.

Also, on the side the information provider 2, it is possible to deliver the information 6 according to specific purposes, thereby increasing the efficiency of information delivery. For example, the information provider 2 can deliver information on high-valued goods to people of a high-annual-income group only or, conversely, deliver information on low-valued goods to low-annual-income people only.

Also, by allowing only those people who have the right of access to the information providing server 1' for purchasing rare goods or receiving an introduction of their information to purchase them or receive their introduction, it is possible to prevent a rush of purchase orders or inquiries as well as scrambling for the purchase of an offered commodity or a service, thus ensuring efficient distribution of the information 6.

With respect to information on tickets of which validity is limited in time, for instance, it is possible to complete the sale of the commodity like tickets within a predefined period of time by limiting the duration of time that the information program 10 stays in each information terminal 5.

### INDUSTRIAL APPLICABILITY

This invention is applicable to advertisement and sale of commodities and services using the Internet.

## Claims

1. A server apparatus in which information to be announced is registered, said server apparatus being connected to a general-purpose network and comprising:
an information processing section for converting said registered information into an information program;
a section for transmitting this information program to an information terminal connected to the general-purpose network; and
a profit calculating section for calculating a profit to be returned to a user of the information terminal;
wherein said information processing section processes the information in such a manner that the information program has the following sections:
(a) an information storage section for storing information to be displayed on the information terminal;
(b) a section for storing the address of each destination information terminal to which the information program has been transferred in the form of a transfer route list; and
(c) a section for transmitting the state of use of the information stored in said information storage section as the type of use of the information together with said transfer route list from the information terminal to said server apparatus; and
wherein upon receiving the type of use of said information and the transfer route list from said information program, said profit calculating section automatically calculates the amount of profit to be paid back to the user of said information terminal as a result of receiving the type of use of said information and the transfer route list.

2. A server apparatus in which information to be announced is registered, said server apparatus being connected to a general-purpose network and comprising:
an information processing section for converting said registered information into an information program;
a section for transmitting this information program to an information terminal connected to the general-purpose network; and
a profit calculating section for calculating a profit to be returned to a server operator;
wherein said information processing section processes the information in such a manner that the information program has the following sections:
(a) an information storage section for storing information to be displayed on the information terminal;
(b) a section for storing the address of each destination information terminal to which the information program has been transferred in the form of a transfer route list; and
(c) a section for transmitting the state of use of the information stored in said information storage section as the type of use of the information together with said transfer route list from the information terminal to said server apparatus; and
wherein upon receiving the type of use of said information and the transfer route list from said information program, said profit calculating section automatically calculates the amount of profit to be paid back from an information provider to said server operator as a result of receiving the type of use of said information and the transfer route list.

3. A profit returning method for returning a profit based on use of information by using a server apparatus in which the information to be announced is registered, said server apparatus being connected to a general-purpose network and said profit returning method comprising:
an information processing step of converting said registered information into an information program;
a step of transmitting this information program to an information terminal connected to the general-purpose network; and
a profit calculating step of calculating the profit to be returned to a user of the information terminal;
wherein said information processing step processes the information in such a manner that the information program has the following sections:
(a) an information storage section for storing information to be displayed on the information terminal;
(b) a section for storing the address of each destination information terminal to which the information program has been transferred in the form of a transfer route list; and
(c) a section for transmitting the state of use of the information stored in said information storage section as the type of use of the information together with said transfer route list from the information terminal to said server apparatus; and
wherein upon receiving the type of use of said information and the transfer route list from said information program, said profit calculating step automatically calculates the amount of profit to be paid back to the user of said information terminal as a result of receiving the type of use of said information and the transfer route list.

4. A profit returning method for returning a profit based on use of information by using a server apparatus in which the information to be announced is registered, said server apparatus being connected to a general-purpose network and said profit returning method comprising:
an information processing step of converting said registered information into an information program;
a step of transmitting this information program to an information terminal connected to the general-purpose network; and
a profit calculating step of calculating the profit to be returned to a server operator;
wherein said information processing step processes the information in such a manner that the information program has the following sections:
(a) an information storage section for storing information to be displayed on the information terminal;
(b) a section for storing the address of each destination information terminal to which the information program has been transferred in the form of a transfer route list; and
(c) a section for transmitting the state of use of the information stored in said information storage section as the type of use of the information together with said transfer route list from the information terminal to a server like an information announcing server; and
wherein upon receiving the type of use of said information and the transfer route list from said information program, said profit calculating step automatically calculates the amount of profit to be paid back from an information provider to said server operator as a result of receiving the type of use of said information and the transfer route list.

5. The profit returning method according to claim 4 or 5, wherein said information is advertising information.

6. A server apparatus in which information to be delivered to specific information terminals is registered, said server apparatus being connected to a general-purpose network and comprising:
an information processing section for converting said registered information into an information program; and
a section for transmitting this information program to one of the information terminals connected to the general-purpose network;
wherein said information processing section processes the information in such a manner that the information program has the following sections:
(a) an information storage section for storing information to be displayed on the information terminal;
(b) a section for storing the address of each destination information terminal to which the information program is transferred in the form of a transfer destination address list; and
(c) a section for transmitting the state of use of the information stored in said information storage section as the type of use of the information from the information terminal to the server apparatus;
said server apparatus further comprising a transfer destination address list selecting section for selecting said transfer destination address list provided in said information program from a plurality of preclassified address lists;
wherein said information program is not transferred to the information terminals on the address lists unselected by said transfer destination address list selecting section but is sequentially transferred from one information terminal to another which are on the transfer destination. address list selected by said transfer destination address list selecting section only without going through a main part of the server apparatus.

7. The server apparatus according to claim 6, wherein said transfer destination address list selecting section selects said transfer destination address list after weighting the preclassified multiple address lists, whereby said information program is sequentially transferred from one information terminal to another which are on a heavily weighted address list selected by said transfer destination address list selecting section at first.

8. A server apparatus in which information to be delivered to specific information terminals is registered, said server apparatus being connected to a general-purpose network and comprising:
an information processing section for converting said registered information into an information program; and
a section for transmitting this information program to one of the information terminals connected to the general-purpose network;
wherein said information processing section processes the information in such a manner that the information program has the following sections:
(a) an information storage section for storing information to be displayed on the information terminal;
(b) a section for storing the address of each destination information terminal to which the information program is transferred in the form of a transfer destination address list;
(c) a section for transmitting the state of use of the information stored in said information storage section as the type of use of the information from the information terminal to said server apparatus; and
(d) a section for deleting the information program in each source information terminal when the information program has been transferred to another information terminal; and
wherein said information program is not transferred to the information terminals which are not on said transfer destination address list but is sequentially transferred from one information terminal to another which are on said transfer destination address list without going through a main part of the server apparatus and, while said information program is being transferred, said information program gives a right of access to the main part of the server apparatus only to the information terminal in which said information program exists, so that only the information terminal having the access right is allowed to access the main part of the server apparatus.

9. The server apparatus according to claim 8 further comprising a section for storing said registered information in classified form, wherein only the information terminal having said access right is allowed to access pieces of information stored in deeper layers among said classified information when said information terminal accesses the main part of said server apparatus.

10. The server apparatus according to claim 8, wherein said information processing section processes said information in such a manner that the information program further has:
(e) a dwell time limit control section for limiting the period of time during which the information program stays in one information terminal so that the information program is automatically transferred to the next information terminal when said period of time has elapsed;
wherein said information program is not transferred to the information terminals which are not on said transfer destination address list but is sequentially transferred from one information terminal to another which are on said transfer destination address list without going through the main part of the server apparatus and, while said information program is being transferred, dwell time of said information program in each information terminal in which said information program exists is limited and said information program is automatically transferred to the next information terminal when said period of time has elapsed.

11. The server apparatus according to one of claims 8 to 10 further comprising a transfer destination address list selecting section for selecting the transfer destination address list stored in said information program from a plurality of preclassified address lists.

12. The server apparatus according to one of claims 8 to 10, wherein said information is concerned with a commodity, a service, real estate, or the like, and said information program is transferred from one information terminal to another as the right of access to the main part of said server apparatus for conducting commercial transactions with respect to such a consumable.

13. An information delivery method for delivering information to individual information terminals by using a server apparatus in which the information to be delivered to specific information terminals is registered, said server apparatus being connected to a general-purpose network and said information delivery method comprising:
an information processing step of converting said registered information into an information program; and
a step of transmitting this information program to one of the information terminals connected to the general-purpose network;
wherein said information processing step processes the information in such a manner that the information program has the following sections:
(a) an information storage section for storing information to be displayed on the information terminal;
(b) a section for storing the address of each destination information terminal to which the information program is transferred in the form of a transfer destination address list; and
(c) a section for transmitting the state of use of the information stored in said information storage section as the type of use of the information from the information terminal to said server apparatus;
said server apparatus further comprising a transfer destination address list selecting step of selecting said transfer destination address list provided in said information program from a plurality of preclassified address lists;
wherein said information program is not transferred to the information terminals on the address lists unselected in said transfer destination address list selecting step but is sequentially transferred from one information terminal to another which are on the transfer destination address list selected in said transfer destination address list selecting step only without going through a main part of the server apparatus so that said information is sequentially delivered.

14. The information delivery method according to claim 13, wherein said transfer destination address list selecting step selects said transfer destination address list after weighting the preclassified multiple address lists, whereby said information program is sequentially transferred from one information terminal to another which are on a heavily weighted address list selected in said transfer destination address list selecting step at first.

15. An information delivery method for delivering information to individual information terminals by using a server apparatus in which the information to be delivered to specific information terminals is registered, said server apparatus being connected to a general-purpose network and said information delivery method comprising:
an information processing step of converting said registered information into an information program; and
a step of transmitting this information program to one of the information terminals connected to the general-purpose network;
wherein said information processing step processes the information in such a manner that the information program has the following sections:
(a) an information storage section for storing information to be displayed on the information terminal;
(b) a section for storing the address of each destination information terminal to which the information program is transferred in the form of a transfer destination address list;
(c) a section for transmitting the state of use of the information stored in said information storage section as the type of use of the information from the information terminal to said server apparatus; and
(d) a section for deleting the information program in each source information terminal when the information program has been transferred to another information terminal; and
wherein said information program is not transferred to the information terminals which are not on said transfer destination address list but is sequentially transferred from one information terminal to another which are on said transfer destination address list without going through a main part of the server apparatus and, while said information program is being transferred, said information program gives a right of access to the main part of said server apparatus only to the information terminal in which said information program exists, so that only the information terminal having the access right is allowed to access the main part of the server apparatus.

16. The information delivery method according to claim 15, wherein said server apparatus further comprises a section for storing said registered information in classified form, wherein only the information terminal having said access right is allowed to access pieces of information stored in deeper layers among said classified information when said information terminal accesses the main part of said server apparatus.

17. The information delivery method according to claim 15, wherein said information processing step processes said information in such a manner that the information program further has:
(e) a dwell time limit control section for limiting the period of time during which the information program stays in one information terminal so that the information program is automatically transferred to the next information terminal when said period of time has elapsed;
wherein said information program is not transferred to the information terminals which are not on said transfer destination address list but is sequentially transferred from one information terminal to another which are on said transfer destination address list without going through the main part of the server apparatus and, while said information program is being transferred, dwell time of said information program in each information terminal in which said information program exists is limited and said information program is automatically transferred to the next information terminal when said period of time has elapsed.

18. The information delivery method according to one of claims 15 to 17 further comprising a transfer destination address list selecting step of selecting the transfer destination address list stored in said information program from a plurality of preclassified address lists.

19. The information delivery method according to one of claims 15 to 17, wherein said information is concerned with a commodity, a service, real estate, or the like, and said information program is transferred from one information terminal to another as the right of access to the main part of said server apparatus for conducting commercial transactions with respect to such a consumable.
